# EUROPEAN PATENT APPLICATION

(11) **EP 4 733 132 A1**
(43) Date of publication of application: **29.04.2026**
(21) Application number: 24826370.9
(22) Date of filing: 20.06.2024
(51) Int. Cl.: B60N 2/28, A01K 1/02

(54) **CARRIER**

(30) Priority: 20.06.2023 CN 202310739208; 28.09.2023 CN 202311281154; 19.12.2023 CN 202311753107; 17.06.2024 CN 202410780686
(71) Applicant: Jani International Pte. Ltd., Singapore 569874 (SG)
(72) Inventor: ZHU, Wanquan, Singapore 569874 (SG); CHEN, Yingzhong, Singapore 569874 (SG); GUO, Zhengwen, Singapore 569874 (SG)
(74) Representative: Pfenning, Meinig & Partner mbB
(86) International application number: PCT/SG2024/050408
(87) International publication number: WO 2024/263103

(57) **Abstract**

The present invention discloses a carrier, the carrier is fixed to a vehicle seat through a fixing base assembly and an auxiliary fixing device, the fixing base assembly is connected to one end of the carrier in a longitudinal direction, and a central axis of the fixing base assembly in the longitudinal direction is offset relative to a central axis of the carrier in the longitudinal direction; and the auxiliary fixing device includes a fixing belt, and the fixing belt is routed from a position above the carrier to a position below the carrier through a side of the carrier away from a backrest of the vehicle seat; and the fixing belt is at least partially routed on the other end of the carrier in the longitudinal direction.

## Description

### TECHNICAL FIELD

The present invention relates to a carrier, and in particular, to a carrier applicable to a vehicle seat.

### BACKGROUND

In recent years, more and more caregivers use carriers suitable for pets to ride in to reduce a burden during traveling. However, when a moving distance is long and a vehicle is required to be used for transportation, an existing handheld carrier may incline or even drop out during traveling of the vehicle due to unstable fixing in the vehicle, thereby causing a safety risk in use. Therefore, how to stably fix the carrier to the vehicle or a mobile device is still an urgent problem to be solved.

Some existing carriers suitable for pets to ride in (e.g., sleeping boxes) may be fixed to a vehicle seat by a fixing base assembly. Such a carrier generally has a large length, resulting in an insufficient space for longitudinally fixing the carrier to the vehicle seat, and therefore, the carrier is generally engaged and fixed to the fixing base assembly transversely, and then, the fixing base assembly is arranged on the vehicle seat, so that the carrier is arranged transversely relative to the vehicle seat. Thus, after the carrier is fixed to the fixing base assembly, an end (e.g., an end away from a vehicle door) thereof which does not contact and is not engaged with the fixing base assembly is suspended, so that when the vehicle is subjected to a front impact, the end of the carrier which does not contact and is not engaged with the fixing base assembly will be greatly deformed, which may increase the risk of an injury to the pet in the carrier.

### SUMMARY

In an aspect, the present invention provides a carrier, including: a box body defining an accommodation space; a bracket device combined to the box body and including a guide member; and a belt guide mechanism arranged on the bracket device and configured to cooperate with a fixing belt assembly to fix the carrier to a vehicle seat. The belt guide mechanism includes a first belt guide mechanism, the first belt guide mechanism is arranged on the guide member, and the first belt guide mechanism and the guide member collectively define at least one first channel for the fixing belt assembly to pass through; and the first belt guide mechanism includes a cam clamp, and the cam clamp is pivotable relative to the guide member to clamp or release the fixing belt assembly.

Further, the guide member is provided with at least one first fitting member, the cam clamp is provided with at least one second fitting member, and the first fitting member and the second fitting member are capable of being engaged with each other to act on the fixing belt assembly.

Further, a plurality of first fitting members protrude from the guide member, a plurality of second fitting members protrude from the cam clamp, and the plurality of first fitting members and the plurality of second fitting members are alternately arranged in a longitudinal direction of the carrier and/or an extending direction of the fixing belt assembly.

Further, the first belt guide mechanism includes a cover, and at least one first channel is formed between the cover and the guide member; at least one cam clamp is located in the at least one first channel; one end of the cam clamp is pivotally connected to one of the cover and the guide member through a pivot shaft, and the other end of the cam clamp is configured to abut against the other of the cover and the guide member to clamp the fixing belt assembly.

Further, the first belt guide mechanism further includes at least one of: a clamp reset member, the clamp reset member is configured to provide a force biasing the cam clamp towards the guide member; an operating member configured to drive the cam clamp to pivot, so as to release the clamping of the fixing belt assembly; and a cover, the cover forms an outer surface of the first belt guide mechanism and is fixedly connected to the guide member; one end of the cam clamp is pivotally connected to the cover, such that the other end of the cam clamp is pivotable towards or away from the guide member.

Further, the bracket device includes: a canopy frame pivotally connected to the guide member and configured to support a canopy; and a first bracket combined to the box body and arranged around a peripheral wall of the box body; and the guide member is arranged on the first bracket.

Further, the bracket device further includes: a second bracket combined to a bottom wall and a side wall of the box body, two ends of the second bracket are connected to the first bracket; and a third bracket arranged below the bottom of the box body and spaced apart from the box body by a certain distance; and/or the fixing belt assembly includes a shoulder belt, and the shoulder belt passes through the first channel of the first belt guide mechanism.

Further, the fixing belt assembly further includes a waist belt, and the waist belt is routed around the second bracket and passes between the box body and the third bracket.

Further, the bracket device further includes: a third bracket arranged below the bottom of the box body and spaced apart from the box body by a certain distance; and the belt guide mechanism further includes a second belt guide mechanism, and the second belt guide mechanism is arranged on the third bracket and has a second channel for the fixing belt assembly to pass through.

Further, the fixing belt assembly includes a shoulder belt, and the shoulder belt passes through the first belt guide mechanism; and/or the fixing belt assembly includes a waist belt, and the waist belt passes through the second belt guide mechanism.

In another aspect, the present invention further provides a carrier, the carrier is fixed to a vehicle seat through a fixing base assembly and an auxiliary fixing device, the fixing base assembly is connected to one end of the carrier in a longitudinal direction, and a central axis of the fixing base assembly in the longitudinal direction is offset relative to a central axis of the carrier in the longitudinal direction; and the auxiliary fixing device includes a fixing belt, and the fixing belt is at least partially routed on the other end of the carrier in the longitudinal direction through a side of the carrier away from a backrest of the vehicle seat.

Further, the auxiliary fixing device includes: a first connecting end located at one end of the fixing belt, the first connecting end is connected to a first anchoring point on the vehicle seat by a first fixing member; and a second connecting end located at the other end of the fixing belt, the second connecting end is connected to a second anchoring point on the vehicle seat through a second fixing member.

Further, an auxiliary reference plane is defined, the auxiliary reference plane is perpendicular to the longitudinal direction of the carrier and passes through a center of the carrier in the longitudinal direction, and the auxiliary reference plane has a first side and a second side opposite to each other in the longitudinal direction; the fixing base assembly is located on the first side of the auxiliary reference plane or is offset towards the first side of the auxiliary reference plane, and the second anchoring point is located on the second side of the auxiliary reference plane.

Further, the first anchoring point is located on the first side or the second side of the auxiliary reference plane, or located on the auxiliary reference plane; and/or, the auxiliary fixing device includes a shoulder belt, and the shoulder belt constitutes the fixing belt.

Further, the auxiliary fixing device further includes a waist belt, one end of the waist belt is connected to a third anchoring point on the vehicle seat, and the other end of the waist belt is connected to the second connecting end of the fixing belt at the second anchoring point, and the third anchoring point is located on the first side of the auxiliary reference plane.

Further, the carrier satisfies at least one of: the first anchoring point is located at the vehicle seat, or located at an associated anchoring location above the vehicle seat, and the second anchoring point is located on the vehicle seat; the first fixing member is a Tether hook, and the second fixing member is a Tether hook or a LATCH fixing member; and the carrier includes a handle, and the fixing belt extends downwards from a position above the carrier, passes through the handle, and is routed to a position below the carrier, so as to be connected to the second anchoring point.

Further, an auxiliary reference plane is defined, the auxiliary reference plane is perpendicular to the longitudinal direction of the carrier and passes through a center of the carrier in the longitudinal direction, and the auxiliary reference plane has a first side and a second side opposite to each other in the longitudinal direction; the fixing base assembly is located on the first side of the auxiliary reference plane or is offset towards the first side of the auxiliary reference plane, and a part of the fixing belt routed to a position below the carrier is located on the second side of the auxiliary reference plane and spaced apart from the fixing base assembly.

Further, the carrier further includes at least one of: a bracket device supporting a box body of the carrier; the bracket device includes a first bracket, a second bracket, and a third bracket; the first bracket is arranged around a peripheral wall of the box body and close to an upper edge of the box body; the third support is arranged below the box body and spaced apart from the bottom of the box body; and the second bracket is connected between the first bracket and the third bracket, and the second bracket is combined to the box body and extends from one side of the peripheral wall of the box body to the other side of the peripheral wall of the box body via the bottom of the box body; and a canopy assembly including a canopy covering the box body and a canopy frame supporting the canopy, the canopy frame is arranged close to the upper edge of the box body.

Further, the carrier is further provided with at least one of: a first belt guide mechanism arranged on the first bracket and/or the canopy frame, the fixing belt is routed from a position above the carrier, passes through the first belt guide mechanism, and is routed to a position below the box body, so as to be connected to the second anchoring point; and a second belt guide mechanism arranged on the second bracket and/or the third bracket, the fixing belt is routed to a side of the carrier away from the vehicle seat and passes through the second belt guide mechanism, so as to be connected to the second anchoring point through a position below the box body.

Further, an auxiliary reference plane is defined, the auxiliary reference plane is perpendicular to the longitudinal direction of the carrier and passes through a center of the carrier in the longitudinal direction, and the auxiliary reference plane has a first side and a second side opposite to each other in the longitudinal direction; the first belt guide mechanism has two first channels arranged in the longitudinal direction, and at least one of the two first channels is located on the second side of the auxiliary reference plane; when the carrier is fixed to the vehicle seat through the fixing base assembly and the auxiliary fixing device, the fixing base assembly is connected to the carrier at the first side of the auxiliary reference plane, the second anchoring point is located on the second side of the auxiliary reference plane, and the auxiliary fixing device passes through one of the first channels located on the second side; and/or the second belt guide mechanism is arranged on the second side of the auxiliary reference plane.

### BRIEF DESCRIPTION OF THE DRAWINGS

The accompanying drawings which form part of the present application are used to provide further understanding of the present invention, and schematic embodiments of the present invention and the description thereof are used to explain the present invention and do not constitute improper definition of the present invention.
FIG. 1 is a perspective view of a carrier according to a first embodiment of the present disclosure when fixed to a vehicle seat.
FIG. 2 is a perspective view of the carrier shown in FIG. 1 after a box body thereof is omitted.
FIG. 3 is a partial enlarged view of a canopy frame in FIG. 1.
FIG. 4 is a perspective view of the carrier shown in FIG. 1 from another perspective.
FIG. 5 is a partial sectional view taken along line C-C in FIG. 4.
FIG. 6 is a perspective view of a carrier according to a second embodiment of the present disclosure when fixed to a vehicle seat.
FIG. 7 is a top view and a partial enlarged view of the carrier shown in FIG. 6.
FIG. 8A and FIG. 8B are exploded views of a guide member and a first belt guide mechanism.
FIG. 9A and FIG. 9B are perspective views of a cam clamp of the first belt guide mechanism in different states.
FIG. 10A and FIG. 10B are partial enlarged views of the first belt guide mechanism in different states.
FIG. 11A is a sectional view of the first belt guide mechanism taken along line E-E in FIG. 7.
FIG. 11B is a sectional view of the first belt guide mechanism shown in FIG. 11A in another state.
FIG. 12 is a perspective view of a carrier according to a third embodiment of the present disclosure when fixed to a vehicle seat.
FIG. 13 is a perspective view of the carrier shown in FIG. 12 after a box body is omitted.
FIG. 14 is a perspective view of a carrier according to a fourth embodiment of the present disclosure fixed to a vehicle seat by a fixing base assembly and an auxiliary fixing device.
FIG. 15A is a perspective view of the carrier shown in FIG. 14; FIG. 15B and FIG. 15C are perspective views of the carrier according to the fourth embodiment of the present disclosure, in which different types of handles are shown.
FIG. 16 is a top perspective view of the fixing base assembly shown in FIG. 14.
FIG. 17 is another perspective view of the carrier according to the fourth embodiment of the present disclosure fixed to the vehicle seat by the fixing base assembly and the auxiliary fixing device.
FIG. 18A is a perspective view of the fixing base assembly and the auxiliary fixing device shown in FIG. 17 and partial enlarged views of the auxiliary fixing device, and FIG. 18B is a perspective view of a second fixing member of the auxiliary fixing device shown in FIG. 18A in another state.
FIG. 19A to FIG. 19C are perspective views of a carrier according to an embodiment of the present disclosure respectively, in which different routing manners of the auxiliary fixing device are shown.
FIG. 20 is a perspective view of a carrier according to a fifth embodiment of the present disclosure fixed to a vehicle seat by a fixing base assembly and an auxiliary fixing device.
FIG. 21A is a perspective view of the fixing base assembly and the auxiliary fixing device shown in FIG. 20 and a partial enlarged view of the auxiliary fixing device, and FIG. 21B is a perspective view of a second fixing member of the auxiliary fixing device shown in FIG. 21A from another perspective.
FIG. 22 is a perspective view of a carrier according to a sixth embodiment of the present disclosure fixed to a vehicle seat by a fixing base assembly and an auxiliary fixing device.
FIG. 23 is a perspective view of a carrier according to a seventh embodiment of the present disclosure fixed to a vehicle seat by a fixing base assembly and an auxiliary fixing device.
FIG. 24 is a perspective view of a carrier and an auxiliary fixing device according to an eighth embodiment of the present disclosure.
FIG. 25 is a perspective view of the carrier shown in FIG. 24 after a box body is omitted.
FIG. 26 is a perspective view of a carrier and an auxiliary fixing device according to a ninth embodiment of the present disclosure.
FIG. 27 is a perspective view of the carrier shown in FIG. 26 after a box body is omitted.
FIG. 28 is a perspective view of the carrier and the auxiliary fixing device shown in FIG. 26 from another perspective.
FIG. 29 is a sectional view taken along line C-C in FIG. 28.
FIG. 30A to FIG. 30C are perspective views of a second belt guide mechanism according to an embodiment of the present disclosure.

### DETAILED DESCRIPTION OF THE EMBODIMENTS

To facilitate an understanding of the present disclosure, the present disclosure is described more fully hereinafter with reference to the accompanying drawings. Optional embodiments of the present disclosure are shown in the drawings. However, the present disclosure may be implemented in many different forms and is not limited to the embodiments set forth herein. Rather, these embodiments are provided to make the disclosure of the present disclosure more thorough and complete.

The present disclosure is described in detail below with reference to the accompanying drawings.

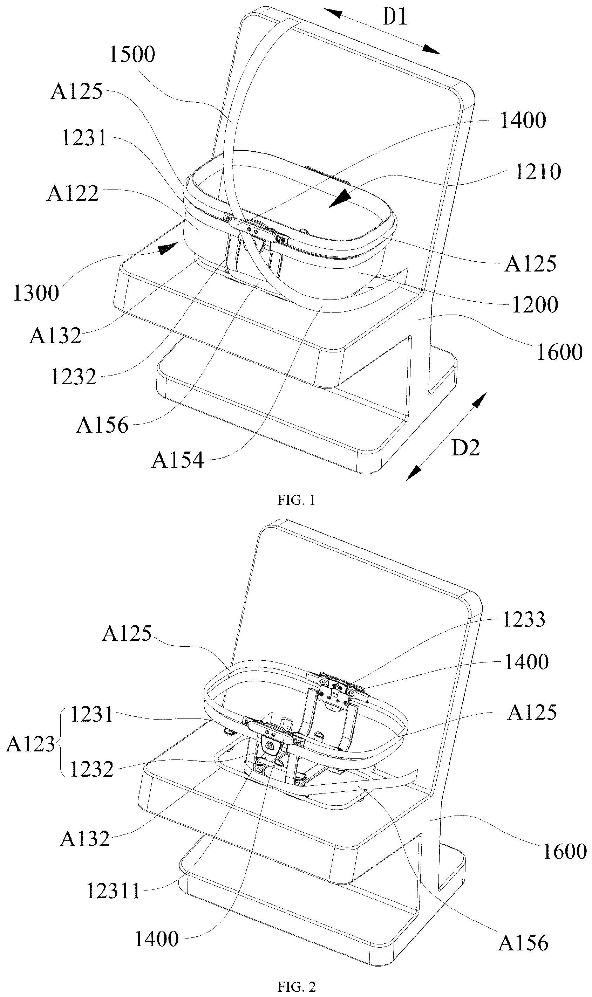

Referring to FIG. 1 to FIG. 2, a carrier according to a first embodiment of the present disclosure includes an infant carrier 1200, a bracket device 1300, a fixing belt assembly 1500, and a belt guide mechanism. The fixing belt assembly 1500 passes through the belt guide mechanism, so that the infant carrier 1200 is fixed to the vehicle seat 1600 and not prone to slip back and forth or left and right.

The infant carrier 1200 includes a box body A122. The box body A122 defines an accommodation space 1210, and the accommodation space 1210 can be configured to accommodate a pet. The box body A122 may be made of expanded materials such as expanded polypropylene (EPP), expanded polyethylene (EPE), and expanded polyolefin (EPO). Certainly, the material of the box body A122 is not limited to the above examples.

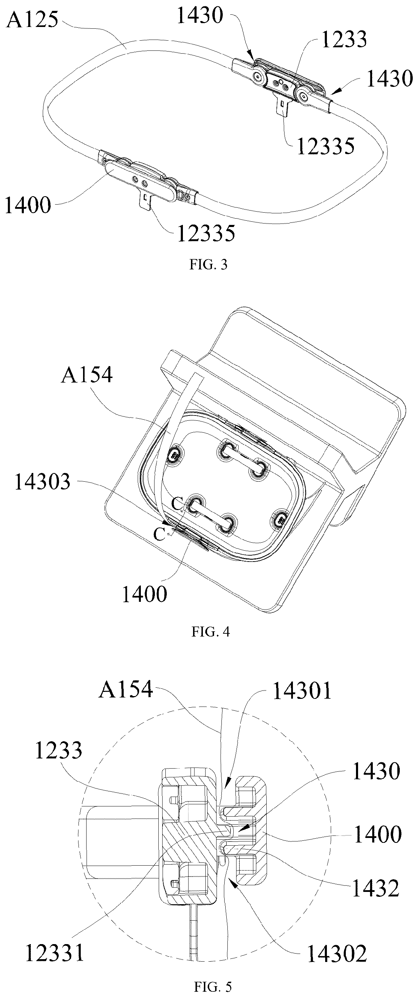

The bracket device 1300 includes a third bracket A132 and a frame structure A123. In some embodiments, the bracket device 1300 may further include a canopy frame A125. The third bracket A132 may be arranged below the bottom of the box body A122 and spaced apart from the box body A122 by a certain distance for the fixing belt assembly 1500 to pass therebetween. The frame structure A123 includes a first bracket 1231 and two second brackets 1232. The first bracket 1231 is substantially annular and is combined to the box body A122 and arranged around a peripheral wall of the box body A122, for example, close to an opening of the box body A122. Both ends of each of the two second brackets 1232 are connected to the first bracket 1231, and the two second brackets are arranged separately from each other in a longitudinal direction (direction D1) of the box body A122. Each second bracket 1232 is combined to a bottom wall and a side wall of the box body A122, and the bottom of each second bracket 1232 is fixedly connected to the third bracket A132 through a fixing base (not shown in the drawings). Thus, the frame structure A123 can provide stable support for the box body A122, and can improve the impact resistance capability of the box body A122. Referring to FIG. 1 and FIG. 3, the canopy frame A125 is configured to support a canopy (not shown in the drawings). Two canopy frames A125 are pivotally connected to both sides of the box body A122. Specifically, the bracket device 1300 further includes guide members 1233, and the ends of each of the canopy frames A125 are pivotally connected to the guide members 1233. By pivoting the canopy frame 125, the canopy can switch between a use state and a folded state, thereby achieving the purposes of shading the sun and facilitating storage.

In some embodiments, the canopy frames A125, the guide members 1233, and the canopy (not shown in the drawings) may collectively be referred to as a canopy assembly. Each of the guide members 1233 is provided with a connecting sheet 12335, and the each of the guide members 1233 is detachably connected to a connecting base 12311 of the first bracket 1231 through the connecting sheet 12335, which allows the canopy assembly to be separated from the box body A122 and the bracket device 1300 (the first bracket 1231).

As shown in FIG. 1 to FIG. 2, in this embodiment, the fixing belt assembly 1500 is a three-point seat belt including a shoulder belt A154 and a waist belt A156 connected to each other. An upper end of the shoulder belt A154 is connected to the top of a backrest of the vehicle seat 1600. The middle of the shoulder belt A154 obliquely crosses the first bracket 1231 and a part of the box body A122, and a lower end of the shoulder belt A154 is detachably connected to a seat belt buckle of the vehicle seat 1600 through a seat belt latch (not shown in the drawings). One end of the waist belt A156 is connected to the vehicle seat 1600, and the other end thereof is connected to the lower end of the shoulder belt A154 through a seat belt latch. Referring to FIG. 2, the waist belt A156 is routed around the outside of the two second brackets 1232, thereby restraining the bottom of the infant carrier 1200 to the vehicle seat 1600.

In some embodiments, the fixing belt assembly 1500 may be replaced by a vehicle seat belt, for example, which also falls within the protection scope of the present application. When the vehicle seat belt is connected to the seat belt buckle of the vehicle seat 1600 through a seat belt latch, the seat belt latch divides the vehicle seat belt into a shoulder belt and a waist belt. Thus, the fixing belt assembly 1500 can directly restrain the carrier to the vehicle seat using the vehicle seat belt, without adding other devices than the vehicle seat belt as the fixing belt assembly 1500.

Referring to FIG. 2 to FIG. 5, the belt guide mechanism in the first embodiment includes a first belt guide mechanism 1400. The first belt guide mechanism 1400 includes a cover which is a substantially long-strip-shaped plate, the middle thereof may be fixed to the guide member 1233 through a fastener such as a screw. The first belt guide mechanism 1400 and the guide member 1233 collectively define two channels (also referred to as first channels) 1430 for the shoulder belt A154 to pass through. The two channels 1430 are respectively located on both sides of the screw and arranged opposite to each other. Depending on a position of the carrier on the vehicle seat 1600, the shoulder belt A154 from either the left or right side may be allowed to pass through the channels 1430. For example, when the carrier is on a rear left seat, the left shoulder belt A154 passes through the left channel 1430. Conversely, when the carrier is on the rear right seat, the right shoulder belt A154 passes through the right channel 1430. Certainly, in some embodiments, the left shoulder belt A154 may pass through the right channel 1430 and the right shoulder belt A154 may pass through the left channel 1430. Referring to FIG. 5, each channel 1430 has a first port 14301 and a second port 14302, and the shoulder belt A154 passes through the first port 14301 and the second port 14302.

In some embodiments, each channel 1430 also has a side introduction port 14303 (see FIG. 4 and FIG. 5), and the side introduction port 14303 is in communication with the channel 1430. By providing the side introduction port 14303, the shoulder belt A154 can easily slide into the channel 1430 in a lateral direction. It may be understood that in other embodiments, the first belt guide mechanism 1400 may also be provided directly on the infant carrier 1200, on the canopy frames A125, on the first bracket 1231, or on the second brackets 1232. It may be understood that the number of the channels 1430 may also be one or more.

As shown in FIG. 5, the guide member 1233 is provided with at least one first convex rib 12331 (also referred to as "first fitting member") protruding towards the first belt guide mechanism 1400. The first belt guide mechanism 1400 is provided with at least one second convex rib 1432 (also referred to as "second fitting member") protruding towards the guide member 1233, and the first convex rib(s) 12331 and the second convex rib(s) 1432 are alternately arranged in an extending direction of the shoulder belt A154. That is, the first convex rib(s) 12331 and the second convex rib(s) 1432 are arranged on side walls opposite to each other in the channel 1430. By reasonably setting heights of the first convex rib(s) 12331 and the second convex rib(s) 1432, the shoulder belt A154 located between the first port 14301 and the second port 14302 is bent around a top end of the first convex rib(s) 12331 and a top end of the second convex rib(s) 1432 in the channel 1430, and thus, the shoulder belt A154 receives movement resistance from the first convex rib(s) 12331 and the second convex rib(s) 1432. In this way, when the fixing belt assembly 1500 is tightened, the shoulder belt A154 would not easily slip relative to the carrier.

When the above-described carrier is in use, the infant carrier 1200 is first fixed to the bracket device 1300, and then, the infant carrier 1200 and the bracket device 1300 are placed on the vehicle seat 1600. Thereafter, the shoulder belt A154 of the fixing belt assembly 1500 is passed around a front side of the infant carrier 1200, and the waist belt A156 is routed around the outside of the two second brackets 1232, and then, the seat belt latch or ISOFIX insert at the lower end of the shoulder belt A154 is inserted into a socket (e.g., seat belt buckle or ISOFIX socket) of the vehicle seat 1600. Finally, the shoulder belt A154 is slid into the channel 1430 from the side introduction port 14303 of the first belt guide mechanism 1400, thereby fixing the infant carrier 1200 to the vehicle seat 1600.

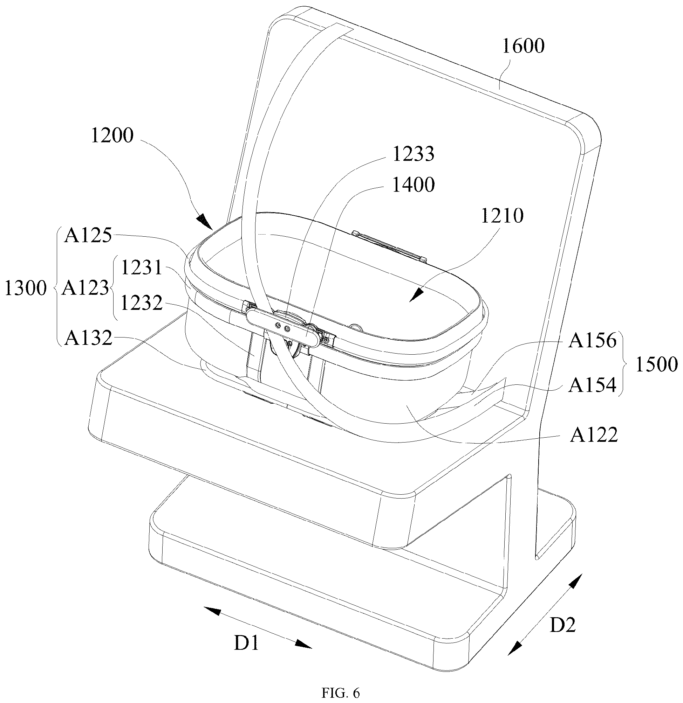

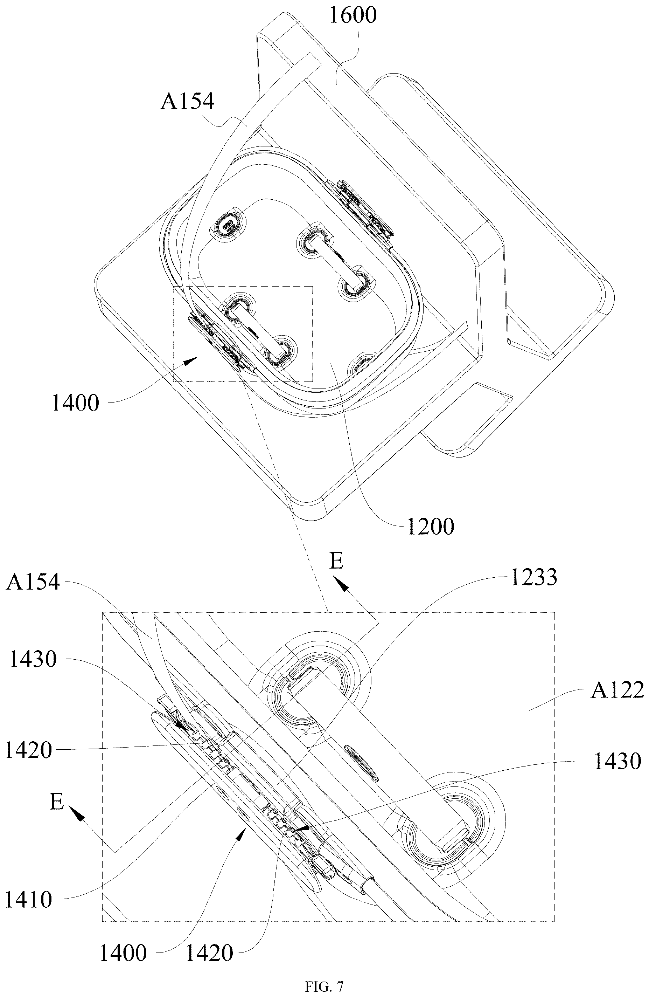

Referring to FIG. 6 and FIG. 7 which show a carrier according to a second embodiment of the present disclosure, the carrier may have a structure similar to that of the first embodiment described above. Specifically, the carrier includes an infant carrier 1200, a bracket device 1300, a fixing belt assembly 1500, and a belt guide mechanism.

The infant carrier 1200 includes a box body A122. The box body A122 defines an accommodation space 1210, and the accommodation space 1210 can be configured to accommodate a pet. The box body A122 may be made of expanded materials such as expanded polypropylene (EPP), expanded polyethylene (EPE), and expanded polystyrene-polyethylene (EPO). Certainly, the material of the box body A122 is not limited to the above examples. As shown in FIG. 6 and FIG. 7, the box body A122 may further be provided with ventilation holes (not numbered in the drawings), a box body belt (not numbered in the drawings) for fixing the pet, or the like, the present disclosure is not limited thereto, and details thereof are not repeated herein.

The bracket device 1300 includes a third bracket A132 and a frame structure A123. The bracket device 1300 is attached to the box body A122. The third bracket A132 may be arranged at the bottom of the box body A122 and spaced apart from the box body A122 by a certain distance for the fixing belt assembly 1500 (e.g., a waist belt A156 shown in FIG. 6) to pass therebetween. The frame structure A123 includes a first bracket 1231 and a second bracket 1232. The first bracket 1231 may be combined to the box body A122 and arranged around a peripheral wall of the box body A122, for example, in a substantially annular shape. In this embodiment, the first bracket 1231 may be close to an opening of the box body A122. Both ends of the second bracket 1232 are connected to the first bracket 1231 respectively. Specifically, the second bracket 1232 may extend through the side and the bottom of the box body A122, and both ends thereof are connected to the first bracket 1231 at both sides of the box body A122 in a transverse direction D2 thereof (i.e., a width direction of the box body 122A) respectively. In an example, two second brackets 1232 are provided, and the two second brackets 1232 are arranged separately from each other in a longitudinal direction D1 (i.e., a length direction) of the box body A122. Each second bracket 1232 is combined to a bottom wall and a side wall of the box body A122, and the bottom of each second bracket 1232 is fixedly connected to the third bracket A132 through a fixing base (not shown in the drawings).

The bracket device 1300 may also include a canopy frame A125 for supporting a canopy (not shown). Similar to the foregoing first embodiment, two canopy frames A125 are arranged in this embodiment, both ends of each canopy frame A125 are respectively located on both sides of the box body A122 (e.g., both sides of the box body A122 in the transverse direction D2), and each canopy frame is pivotable relative to the box body A122. Specifically, the frame structure A123 further includes guide members 1233, and the guide members 1233 are arranged at the first bracket 1231 (corresponding to, for example, the middles of the two sides of the box body A122). Both ends of each canopy frame A125 are respectively pivotally connected to the guide members 1233, such that each canopy frame A125 pivots relative to the box body A122 to unfold or fold the canopy. For structures and connection relationships of the guide members 1233, the canopy frames A125, and the first bracket 1231, reference may be made to the structures and the connection relationships of the guide members 1233, the canopy frames A125, and the first bracket 1231 in the first embodiment.

As shown in FIG. 6, when the two canopy frames A125 are at substantially horizontal positions, the two canopy frames A125 (or together with the guide members 1233) form an annular structure around an outer side of the peripheral wall of the box body A122, thereby avoiding that interference with the opening of the box body A122 hinders the pet from being carried out or put in by a user, and ensuring that the canopy can completely cover the opening of the box body A122.

In this embodiment, the fixing belt assembly 1500 may include a shoulder belt A154, an upper end of the shoulder belt A154 is connected to a backrest (e.g., the top thereof) of the vehicle seat 1600, or is connected to a corresponding structure of the vehicle above the vehicle seat, the middle of the shoulder belt A154 is routed around to a side of the box body A122 of the infant carrier 1200 away from the backrest, and a lower end of the shoulder belt A154 is detachably connected to the vehicle seat 1600 (e.g., the bottom of the backrest).

As shown in FIG. 6 and FIG. 7, the belt guide mechanism in this embodiment may include a first belt guide mechanism 1400. Specifically, the first belt guide mechanism 1400 may be arranged on the side of the box body A122 away from the backrest of the vehicle seat. Optionally, the first belt guide mechanism 1400 may be arranged on a side of the box body A122 close to the backrest of the vehicle seat and on a side of the box body A122 away from the backrest of the vehicle seat, that is, on both sides of the box body A122 in the transverse direction D2 thereof.

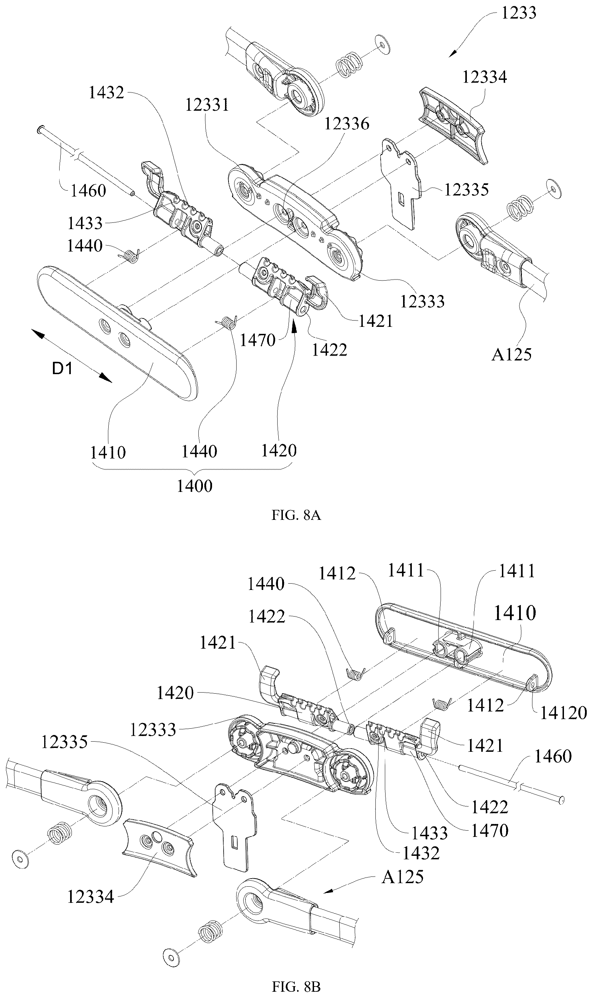

As shown in FIG. 7, the first belt guide mechanism 1400 may be fixed to the guide member 1233 by a fastener such as a screw, and the first belt guide mechanism 1400 and the guide member 1233 together define a channel 1430 for the shoulder belt A154 to pass through. A specific structure, connection manner, and working principle of the first belt guide mechanism 1400 in this embodiment are described below with reference to FIG. 8A to FIG. 11B. In addition, it may be understood that in other embodiments, the first belt guide mechanism 1400 may also be arranged on the box body A122 or on another structure of the bracket device 1300 (e.g., the canopy frames A125), and the disclosure is not limited thereto.

As shown in FIG. 6, the fixing belt assembly 1500 may also include a waist belt A156, that is, the fixing belt assembly 1500 may be a three-point seat belt. One end of the waist belt A156 is detachably connected to the vehicle seat 1600 on a side of the carrier 1200 in the longitudinal direction D1 thereof, and the other end of the waist belt A156 and the lower end of the shoulder belt A154 are together fixedly connected to the vehicle seat 1600 on the other side of the carrier 1200 in the longitudinal direction D1 thereof. In an example, the waist belt A156 may be routed around the outside of the second brackets 1232 of the bracket device 1300 to restrain the bottom of the infant carrier 1200 to the vehicle seat 1600. Optionally, the waist belt A156 is routed around the outside of the second brackets 1232 and passes between the box body A122 and the third bracket A132.

In some embodiments, the fixing belt assembly 1500 may be replaced by a vehicle seat belt, for example, which also falls within the protection scope of the present application.

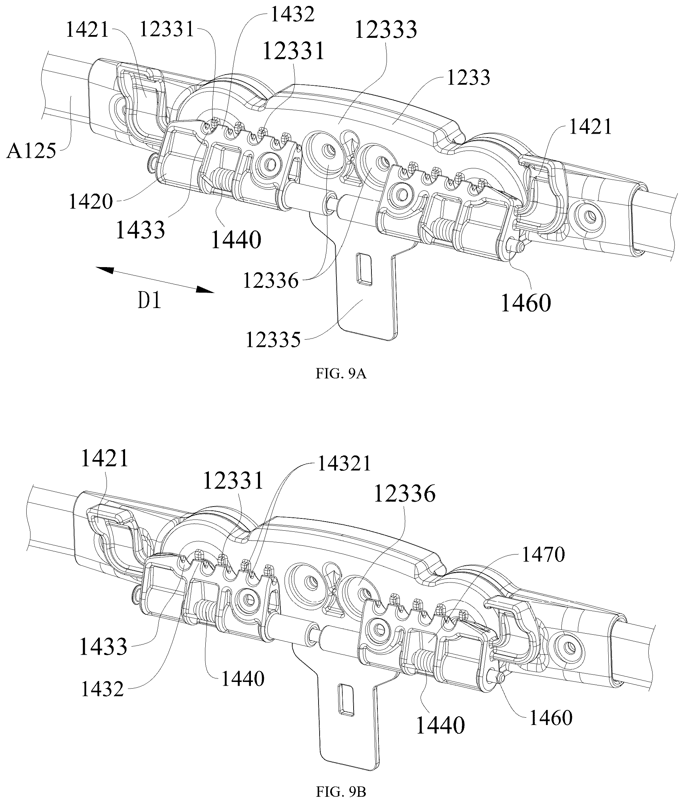

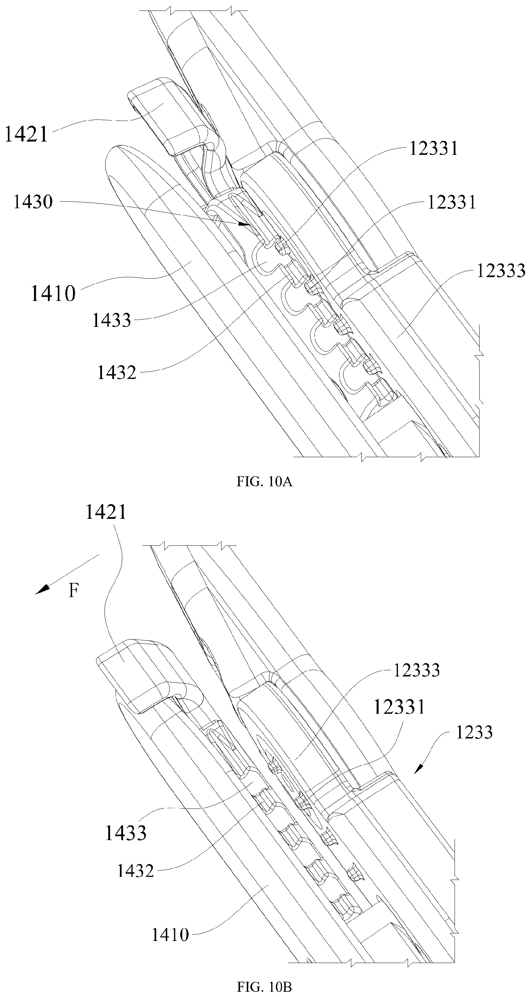

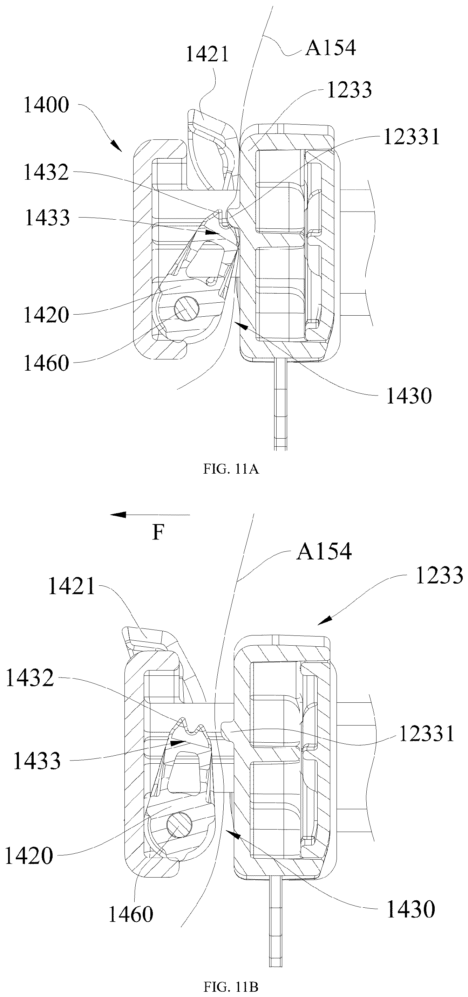

A structure, connection relationship and working principle of the first belt guide mechanism 1400 of this embodiment are described below with reference to FIG. 8A to FIG. 11B. Specifically, FIG. 8A and FIG. 8B show exploded views of the guide member 1233 and the first belt guide mechanism 1400 from different perspectives. FIG. 9A and FIG. 9B respectively show perspective views of a cam clamp 1420 of the first belt guide mechanism 1400 in different states, in which a cover 1410 is removed to show a structure and connection relationship of the cam clamp 1420. FIG. 10A and FIG. 10B respectively show partial perspective views of the first belt guide mechanism 1400 in different states. FIG. 11A shows a sectional view taken along line E-E in FIG. 7, where the first belt guide mechanism 1400 is in a first state. FIG. 11B shows another sectional view of the first belt guide mechanism 1400, where the first belt guide mechanism 1400 is in a second state.

In an embodiment, as shown in FIG. 8A and FIG. 8B, the guide member 1233 may include a first cover 12333, a second cover 12334, and a connecting sheet 12335 fixedly connected between the first cover 12333 and the second cover 12334. As can be seen in connection with FIG. 7 and FIG. 8A, the first cover 12333 and the second cover 12334 are connected to each other to form a casing of the guide member 1233, in a condition when the carrier (including the infant carrier 1200 thereof) is placed on the vehicle seat. Specifically, the first cover 12333 (shown as "outer cover" in the drawings) constitutes an outer surface of a side of the guide member 1233 away from the box body A122, the second cover 12334 (shown as "inner cover" in the drawings) constitutes an outer surface of a side of the guide member 1233 close to the box body A122, and the connecting sheet 12335 is fixedly connected between the first cover 12333 and the second cover 12334 and may extend out from a lower side of the casing of the guide member 1233, so as to be detachably connected to the first bracket 1231, for example, thereby fixing the guide member 1233 and the canopy frame A125 connected thereto around the box body A122. In an example, both ends of the first cover 12333 are pivotally connected to one ends of the two canopy frames A125 respectively, and the second cover 12334 is located between the pivot points of the two canopy frames A125 and the first cover 12333 and is fixedly connected to the first cover 12333, but the disclosure is not limited thereto. In another example, each of both ends of the second cover 12334 may be pivotally connected to one canopy frame A125, and the first cover 12333 is fixedly connected between two pivot points thereof. In other examples, the first cover 12333 is fixedly connected to the second cover 12334, and both ends of the first cover 12333 and both ends of the second cover 12334 may be pivotally connected to the canopy frames A125.

The first belt guide mechanism 1400 may include a cover 1410, and the cover 1410 may be, for example, a substantially long-strip-shaped plate, forming an outer surface of the first belt guide mechanism 1400. Referring to FIG. 7 and FIG. 8A together, the cover 1410 is fixedly connected to the guide member 1233, and the cover 1410 and the guide member 1233 form a channel 1430 for the shoulder belt A154 to pass through. In this embodiment, the cover 1410 is fixedly connected to the first cover 12333 of the guide member 1233.

Specifically, as shown in FIG. 8A and FIG. 8B, a positioning post 1411 may be arranged on the cover 1410 and configured to connect and position the first belt guide mechanism 1400 to the guide member 1233. The positioning post 1411 protrudes from an inner side (i.e., a side close to the box body A122) of the cover 1410 to be connected to the first cover 12333 of the guide member 1233. For example, the positioning post 1411 is received in an accommodating groove 12336 correspondingly arranged in the first cover 12333. In an example, the positioning post 1411 is centrally arranged in the cover 1410, so that two channels 1430 are formed between the cover 1410 and the guide member 1233, and the two channels 1430 are respectively located at two sides of the positioning post 1411.

As shown in FIG. 8A and FIG. 8B, this embodiment is different from the first embodiment in that, the first belt guide mechanism 1400 further includes a cam clamp 1420, and the second fitting member(s) may be arranged on the cam clamp 1420, instead of being arranged on the cover of the first belt guide mechanism 1400 shown in FIG. 5. The cam clamp 1420 may be arranged on another component of the first belt guide mechanism 1400 such as the cover 1410. Certainly, in some alternative embodiments, the cam clamp 1420 may be arranged on the guide member 1233 (more specifically, on the first cover 12333). The cam clamp 1420 may have an elongated structure extending in the longitudinal direction D1. The cam clamp 1420 is configured to be pivotable, for example relative to the bracket device of the carrier (specifically the guide member 1233 in this embodiment), such that the fixing belt assembly (e.g., the shoulder belt A154) passing between the cam clamp 1420 and the guide member 1233 (or between the cam clamp 1420 and the cover 1410) is clamped (and restrained) between the cam clamp 1420 and the guide member 1233(or between the cam clamp 1420 and the cover 1410), so as to limit or impede movement of the shoulder belt A154, thereby avoiding that the shoulder belt A154 slides between the first belt guide mechanism 1400 and the bracket device 1300 to accidentally loose, and then improving firmness and stability of fixing of the carrier to the vehicle seat. More specifically, at least a part of the cam clamp 1420 is in the channel 1430, so as to clamp the fixing belt assembly between a wall of the channel 1430 and the cam clamp 1420.

With further reference to FIG. 9A and FIG. 9B together, one end (also referred to as a first end) of the cam clamp 1420 may be pivotally connected to the cover 1410 via a pivot shaft (e.g., a latch 1460), so that the other end (also referred to as a second end) of the cam clamp 1420 can move close to or away from the guide member 1233. When the other end of the cam clamp 1420 moves close to and abuts against the guide member 1233 (i.e., the wall of the channel 1430), the fixing belt assembly (i.e., the shoulder belt) may be clamped between them two. When the other end of the cam clamp 1420 moves away from the guide member 1233, the clamping force provided by them two is released (that is, the clamping on the fixing belt assembly is released), and at this moment, the fixing belt assembly can slide relatively to facilitate the user to remove the fixing belt assembly from the carrier.

Specifically, as shown in FIG. 8A to FIG. 9B, a lower end of the cam clamp 1420 may be provided with a pivot hole 1422, and the pivot hole 1422 may extend through the cam clamp 1420 in a length direction (i.e., the longitudinal direction D1) of the cam clamp 1420. A position of the cover 1410 corresponding to the pivot hole 1422 in the longitudinal direction D1 may be provided with a cover connecting portion 1412 (as shown in FIG. 8B, the cover connecting portion 1412 is provided with a hole 14120 corresponding to the pivot hole 1422). The cam clamp 1420 is pivotally connected to the cover 1410 by arranging the latch 1460 through the cover connecting portion 1412 and the pivot hole 1422 in sequence.

Certainly, in some alternative embodiments, the first end of the cam clamp 1420 may be pivotally connected to the guide member 1233 through a pivot shaft (e.g., a latch), so that the other end of the cam clamp 1420 can move close to or away from the cover 1410. When the second end of the cam clamp 1420 moves close to and abuts against the cover 1410 (i.e., the wall of the channel 1430), the fixing belt assembly (i.e., the shoulder belt) may be clamped between them two.

Referring to FIG. 7, FIG. 9A, and FIG. 9B together, two cam clamps 1420 may be arranged symmetrically with respect to a center line of the guide member 1233 in this embodiment. The two cam clamps 1420 act in the two channels 1430 (see FIG. 7) on both sides of the positioning post 1411 (i.e., corresponding to the accommodating groove 12336, referring to FIG. 8A and FIG. 9B together) respectively. In an example, the two cam clamps 1420 are arranged between the two cover connecting portions 1412 on the cover 1410 and avoid the positioning post 1411 and the accommodating groove 12336 (that is, the structures of the cam clamps 1420 do not interfere with the positioning post 1411 and the accommodating groove 12336). The latch 1460 may be arranged through the holes of the two cover connecting portions 1412 and the pivot holes 1422 of the two cam clamps 1420 between the two cover connecting portions 1412, so that the two cam clamps 1420 are pivotable relative to the cover 1410.

Referring to FIG. 8A, FIG. 9A, and FIG. 9B, one of the guide member 1233 and the first belt guide mechanism 1400 is provided with a first fitting member(s), and the other thereof is provided with a second fitting member(s). The first fitting member(s) and the second fitting member(s) can be engaged with each other to increase the clamping force provided for the fixing belt assembly passing them two, thereby further limiting the movement of the fixing belt assembly.

In some embodiments, the first fitting member(s) 12331 is arranged on the guide member 1233, and the second fitting member(s) 1432 is correspondingly arranged on the first belt guide mechanism 1400 and is capable of being in shape fit with the first fitting member(s) 12331.

In a specific example, the first fitting member(s) 12331 may be at least one convex rib or tooth-like member protruding towards the first belt guide mechanism 1400, the second fitting member(s) 1432 may be at least one convex rib or tooth-like member protruding towards the guide member 1233, and the first fitting member(s) and the second fitting member(s) may be alternately arranged in the extending direction of the shoulder belt A154 to hinder sliding of the shoulder belt A154 in the channel 1430.

Specifically, the first fitting member(s) 12331 may be arranged on the first cover 12333 of the guide member 1233, and the second fitting member(s) 1432 may be correspondingly arranged on the cam clamp 1420 of the first belt guide mechanism 1400. For example, the second fitting member(s) 1432 may be arranged at an upper end (i.e., an end that can move close to or away from the guide member 1233) of the cam clamp 1420.

In an example, the first fitting member(s) 12331 and the second fitting member(s) 1432 may be formed as tooth-like structures alternately arranged in the longitudinal direction D1 (i.e., a lateral direction of the channel 1430 in which the shoulder belt A154 slides out of the channel 1430), so as to be capable of being meshed with each other. Specifically, the first fitting member(s) 12331 may be a plurality of first tooth-like members arranged on the first cover 12333 in the longitudinal direction D1, the second fitting member(s) 1432 may be a plurality of second tooth-like members arranged on the upper end of the cam clamp 1420 in the longitudinal direction D1, and the plurality of first tooth-like members and the plurality of second tooth-like members may be meshed with each other. It should be noted that the first fitting member(s) and the second fitting member(s) of the present disclosure are not limited to the above structure, and they may also be convex ribs alternately arranged relative to each other, protrusions and recesses that fit each other, or the like.

In an example, referring to FIG. 9A, FIG. 9B, and FIG. 10A, a plurality of first fitting members 12331 are arranged at intervals along the longitudinal direction D1, and each first fitting member 12331 protrudes outwards from the guide member 1233. A plurality of second fitting members 1432 are arranged at intervals along the longitudinal direction D1, and the plurality of second fitting members 1432 protrude outwards from the second end of the cam clamp 1420. The plurality of first fitting members 12331 and the plurality of second fitting members 1432 are alternately arranged in the longitudinal direction D1 of the carrier to fit each other, so that the shoulder belt A154 clamped between the plurality of first fitting members 12331 and the plurality of second fitting members 1432 has a bent shape. Thus, when the shoulder belt A154 of the fixing belt assembly 1500 passes through the channel 1430 and is clamped by the cam clamp 1420, the fitting of the plurality of first fitting members 1432 and the plurality of second fitting members 1432 may impede the shoulder belt A154 from moving in the longitudinal direction D1 within the channel 1430, thereby preventing the shoulder belt A154 from being easily separated from the channel 1430.

With continued reference to FIG. 9A, FIG. 9B, and FIG. 10A, a recess 1433 is formed between every two adjacent second fitting members 1432. The recess 1433 may accommodate the first fitting member 12331 and the shoulder belt A154 when the shoulder belt A154 is clamped by the cam clamp. Additionally, each second fitting member 1432 may include at least two teeth 14321. Certainly, the structures of the first fitting member(s) 12331 and the second fitting member(s) 1432 of the present application are not limited thereto.

As shown in FIG. 9A, the first belt guide mechanism 1400 may further include an operating member 1421. The operating member 1421 is operable to switch the first belt guide mechanism 1400 between a first state and a second state. When the first belt guide mechanism 1400 is in the first state, the first belt guide mechanism 1400 and the guide member 1233 together form the clamping force applied to the fixing belt assembly passing between them two. When the fixing belt assembly is needed to be released, the operating member 1421 may be operated to switch the first fixing belt guide mechanism 1400 from the first state to the second state, thereby releasing the clamping force applied to the fixing belt assembly. More specifically, the operating member 1421 is operably connected to the cam clamp 1420 to drive the cam clamp 1420 to pivot, so as to release the clamping force applied to the fixing belt assembly.

Referring to FIG. 9A to FIG. 11B together, when the first belt guide mechanism 1400 is in the first state (referring to FIG. 9A, FIG. 10A, and FIG. 11A), the cam clamp 1420 (at least a part thereof, e.g., the upper end thereof) moves close to or abuts against the guide member 1233, and the first fitting member(s) 12331 and the second fitting member(s) 1432 are engaged with each other (in some embodiments not shown, for example, the first tooth-like member(s) as the first fitting member(s) 12331 and the second tooth-like member(s) as the second fitting member(s) 1432 are meshed with each other) to have the fixing belt assembly passing through the channel 1430 be clamped between them two, thereby preventing the fixing belt assembly from accidentally sliding.

When the fixing belt assembly is needed to be moved or detached, the user may operate the operating member 1421 to switch the first belt guide mechanism 1400 to the second state (referring to FIG. 9B, FIG. 10B, and FIG. 11B), and at this moment, the cam clamp 1420 moves away from the guide member 1233, and the first fitting member(s) 12331 and the second fitting member(s) 1432 are separated from each other, thereby releasing the fixing belt assembly clamped between them two. Optionally, the operating member 1421 may be arranged on the cam clamp 1420, for example, extends outwards (i.e., to both sides) from the cam clamp 1420 in the longitudinal direction D1. More specifically, the operating member 1421 may be arranged at the upper end of the cam clamp 1420, and may be shaped to extend outwards and upwards from a side of the cam clamp 1420, and meanwhile avoids interference with the latch 1460. When the operating member 1421 is operated, the cam clamp 1420 may pivot away from the guide member 1233 along with the operating member 1421, thereby releasing the clamping force applied to the shoulder belt A154. In a specific example, the operating member 1421 may be arranged at the upper end of the cam clamp 1420, i.e., an end of the cam clamp 1420 that can move close to or away from the guide member 1233.

Referring to FIG. 8A and FIG. 9A together, the first belt guide mechanism 1400 may further include a clamp reset member 1440 that provides a force for biasing the cam clamp 1420 towards the guide member 1233. Optionally, the clamp reset member 1440 may be arranged between the cover 1410 and the cam clamp 1420. In a specific example, the clamp reset member 1440 may be a torsion spring sleeved on the latch 1460 and abutting against the cover 1410 and the cam clamp 1420 respectively, so that the cam clamp 1420 is always biased towards the guide member 1233, that is, tends to be or is maintained in a clamping state. Optionally, the cam clamp 1420 is provided with an accommodating portion 1470 therein, and the clamp reset member 1440 is sleeved on the latch 1460, and is placed in the accommodating portion 1470, and abuts between an inner surface of the accommodating portion 1470 and the cover 1410.

In addition, referring to FIG. 9A and FIG. 9B, in this embodiment, two cam clamps 1420 may be provided, each cam clamp 1420 is provided with one operating member 1421, and the user may operate the operating member 1421 arranged on any of the cam clamps 1420 to release the corresponding fixing belt assembly as desired. In an example, the two operating members 1421 are located on sides of the two cam clamps 1420 away from each other. In other examples, only one operating member 1421 may be provided, the one operating member 1421 simultaneously controls the two cam clamps 1420 arranged at both sides, and the present disclosure is not limited thereto.

An operating principle of the first belt guide mechanism 1400 is described in detail below with reference to FIG. 11A and FIG. 11B.

As shown in FIG. 11A and FIG. 11B, when the first belt guide mechanism 1233 is in the first state (i.e., an initial state, see FIG. 11A), the upper end of the cam clamp 1420 abuts against the first cover 12333 of the guide member 1233, and the first fitting member(s) 12331 and the second fitting member(s) 1432 are engaged with each other such that the shoulder belt A154 of the fixing belt assembly passing through the channel 1430 is clamped between them two, so as to prevent the shoulder belt from accidentally sliding. At this moment, the operating member 1421 is close to the guide member 1233.

When the fixing belt assembly is needed to be moved or detached, the user may operate the operating member 1421, for example, pull the operating member 1421 outwards (i.e., towards the cover 1410), that is, pull (operate) the operating member 1421 in a direction F shown in FIG. 10B and FIG. 11B, so as to switch the first belt guide mechanism 1400 to the second state (see FIG. 11B), and at this moment, the upper end of the cam clamp 1420 pivots away from the guide member 1233 with the pivot shaft (i.e., the latch 1460) as a center, and the first fitting member(s) 12331 and the second fitting member(s) 1432 are disengaged from each other, thereby releasing the shoulder belt A154 clamped between them two.

It may be appreciated that in some alternative embodiments, when the cam clamp 1420 is arranged on the guide member 1233 (e.g., pivotally connected to the guide member 1233), the first fitting member(s) is arranged on the cover 1410, and the second fitting member(s) arranged on the cam clamp 1420 may be engaged with the first fitting member(s) correspondingly arranged on the cover 1410 of the first belt guide mechanism 1400 to clamp the shoulder belt A 154, and the disclosure is not limited thereto.

In addition, in other embodiments, the shoulder belt A154 of the fixing belt assembly 1500 may pass through the first belt guide mechanism 1400 arranged on a side of the carrier away from the backrest of the vehicle seat. Correspondingly, the shoulder belt A154 passes through and is restrained by the cam clamp 1420 that on a side away from an ISOFIX interface. However, it should be understood that the shoulder belt A154 may also pass through the first belt guide mechanism 1400 arranged on a side of the carrier close to the backrest of the vehicle seat, and the disclosure is not limited thereto.

Additionally, in some alternative embodiments, the first fitting member may also be formed on the first belt guide mechanism rather than the guide member. More specifically, the cover 1410 of the first belt guide mechanism includes, for example, a bottom shell and a face shell, and the first channel for the shoulder belt A154 to pass through is formed between the bottom shell and the face shell. The cam clamp is correspondingly located between the bottom shell and the face shell of the cover 1410. The cam clamp is pivotally connected to one of the bottom shell and the face shell of the cover 1410, and the first fitting member(s) is arranged on the other of the bottom shell and the face shell of the cover 1410.

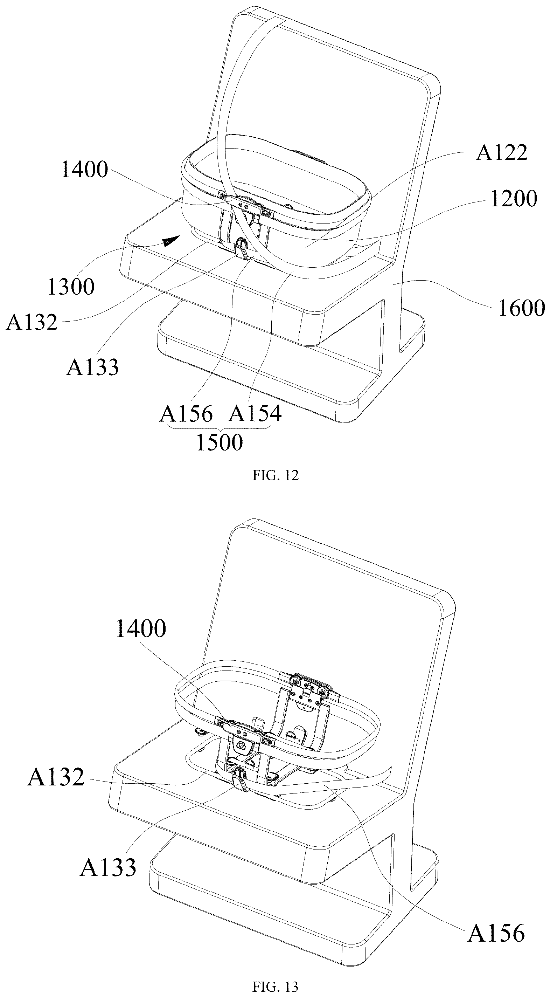

Referring to FIG. 12 to FIG. 13, a carrier according to a third embodiment of the present disclosure has a structure similar to that of the carriers according to the first and second embodiments, and includes an infant carrier 1200, a bracket device 1300, a fixing belt assembly 1500, and a belt guide mechanism. Similar to the structures of the carriers according to the first and second embodiments, the fixing belt assembly 1500 is a three-point seat belt and includes a shoulder belt A154 and a waist belt A156 connected to each other. A main difference is that the belt guide mechanism includes a second belt guide mechanism a133 in addition to the first belt guide mechanism 1400. The fixing belt assembly 1500 passes through the first belt guide mechanism 1400 and the second belt guide mechanism a133 to provide multiple connecting points between the fixing belt assembly 1500 and the bracket device 1300, so that the infant carrier 1200 is better fixed to the vehicle seat 1600 and not prone to slip back and forth or left and right.

Specifically, the bracket device 1300 of the third embodiment includes a third bracket A132 having a substantially annular shape. The second belt guide mechanism A133 may be fixed to the third bracket A132 by a fastener such as a screw, and is located at the bottom of the infant carrier 1200. The second belt guide mechanism A133 may include a bottom shell and a face shell that together define a channel (also referred to as a second channel) for the fixing belt assembly 1500 (e.g., the waist belt A156) to pass through. When the fixing belt assembly 1500 fixes the carrier to the vehicle seat 1600, the waist belt A156 may pass through the second channel so as to be limited.

When the carrier is in use, the infant carrier 1200 is first fixed to the bracket device 1300, and then, the infant carrier 1200 and the bracket device 1300 are placed on the vehicle seat 1600. Thereafter, the waist belt A156 of the fixing belt assembly 1500 is passed through the second belt guide mechanism A133 and then passed around the front side of the infant carrier 1200, the waist belt A156 is routed around the outside of the two second brackets 1232, and then, the seat belt latches or ISOFIX inserts at connecting points of the lower ends of the waist belt A156 and the shoulder belt A154 are inserted into the sockets (e.g., seat belt buckles or ISOFIX sockets) of the vehicle seat 1600. Finally, the shoulder belt A154 is slid into the channel 1430 from the side introduction port 14303 of the first belt guide mechanism 1400, thereby fixing the infant carrier 1200 to the vehicle seat 1600.

In addition, the fixing belt assembly can also be a two-point seat belt and perform two-point fixing on the carrier. As shown in FIG. 13, the fixing belt assembly 1500 includes the waist belt A156. Both ends of the waist belt A156 are connected to the vehicle seat at both sides of the box body respectively, and the waist belt A156 passes around the bracket device 1300 from the side of the carrier away from the backrest of the vehicle seat (i.e., an outer side), and passes between the bottom of the box body A122 and the third bracket A132, thereby restraining the bottom of the box body A122 to the vehicle seat. Furthermore, the carrier can also be subjected to two-point fixing by a three-point seat belt. Specifically, the fixing belt assembly 1500 may be a three-point seat belt and include a shoulder belt and a waist belt (for example, reference may be made to the shoulder belt A154 and the waist belt A156 in FIG. 12). In this example, the waist belt may adopt a connection manner similar to that in the previous example, and therefore is not repeated herein; and the shoulder belt is not used to fix the carrier. For example, the shoulder belt may be draped alongside the box body A122 without applying a force to the box body. Optionally or alternatively, the shoulder belt may pass between the box body A122 and the backrest of the vehicle seat (no force is applied to the box body).

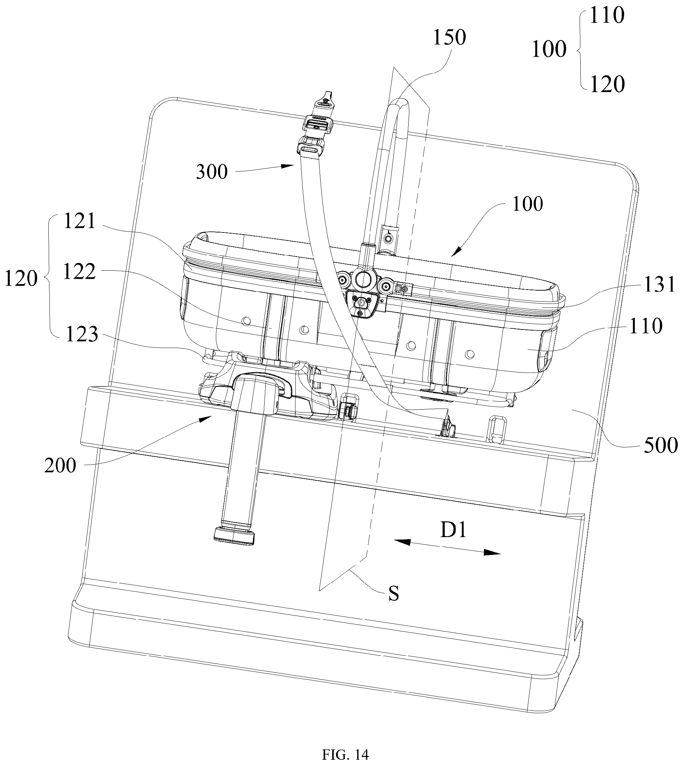

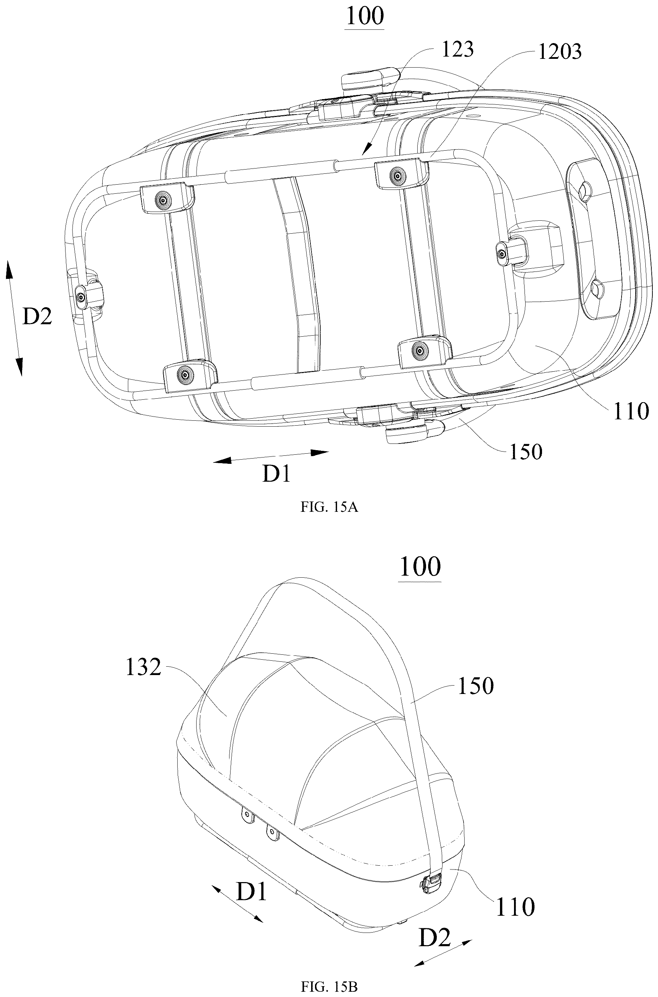

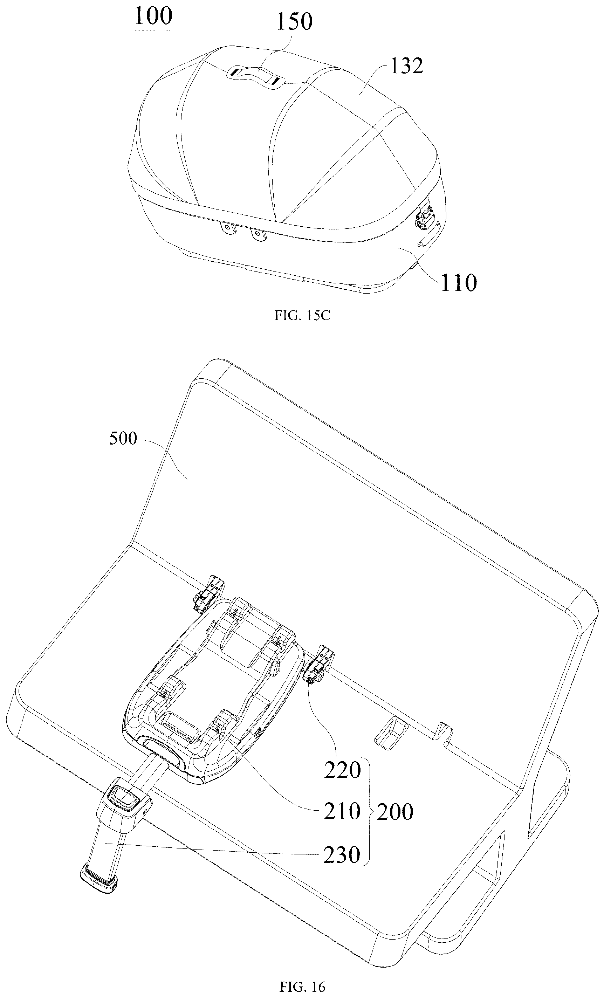

Referring to FIG. 14 to FIG. 16, the present disclosure provides a carrier 100 such as a sleeping box, an infant basket, or a pet basket. FIG. 14 is a perspective view of the carrier 100 according to a fourth embodiment of the present disclosure fixed to a vehicle seat 500 through a fixing base assembly 200 and an auxiliary fixing device 300, and FIG. 15A is a perspective view of the carrier 100 shown in FIG. 14. FIG. 15B and FIG. 15C are perspective views of the carrier 100 according to an embodiment of the present disclosure respectively, in which different types of handles are shown. FIG. 16 is a top perspective view of the fixing base assembly 200 shown in FIG. 14.

As shown in FIG. 14, the carrier 100 includes a box body 110 and a bracket device 120. The box body 110 has a bottom and a peripheral wall connected to the bottom, wherein the bottom and the peripheral wall together form an accommodation space for a pet to ride in, and the box body 110 has an upward opening for the pet in the accommodation space to go in and out. The bracket device 120 is configured to support the box body 110, and includes a first bracket 121, a second bracket 122, and a third bracket 123. The first bracket 121 is arranged around the peripheral wall of the box body 110 and close to the opening of the box body 110. The third bracket 123 is arranged at the bottom of the box body 110 and spaced apart from the box body 110. Specifically, the first bracket 121 is arranged substantially parallel to the third bracket 123. The second bracket 122 is connected between the first bracket 121 and the third bracket 123. Specifically, the second bracket 122 may be combined to the box body 110 and extend from one side of the peripheral wall of the box body 110 to the other side of the peripheral wall of the box body 110 via the bottom of the box body 110. Both ends of the second bracket 122 are connected to the first bracket 121 respectively, and the third bracket 123 is connected to a bottom of the second bracket 122.

The carrier 100 according to the present disclosure may be fixed to the vehicle seat 500 through the fixing base assembly 200. In an example, the carrier 100 may be fixed to the fixing base assembly 200 through the bracket device 120 (e.g., the third bracket 123 arranged below the bottom of the box body 110), and then, the fixing base assembly 200 and the carrier 100 arranged thereon are fixed to the vehicle seat 500. Specifically, referring to FIG. 14 to FIG. 16 together, the third bracket 123 includes an engaging member 1203, and the engaging member 1203 is an annular structural member and is spaced apart from the bottom of the box body 110. For example, the engaging member 1203 may be an annular rod or tube, but the disclosure is not limited thereto. Optionally, a center of the engaging member 1203 substantially corresponds to a center of the box body 110, that is, is arranged at the bottom of the box body 110 centrally in a longitudinal direction D1 and a transverse direction D2. The carrier 100 is detachably connected to the fixing base assembly 200, and the carrier 100 can be used alone after being detached from the fixing base assembly 200.

As shown in FIG. 16, the fixing base assembly 200 of the present disclosure may include an engaging portion 210, a fixing base connecting device 220, and a supporting leg 230. The engaging portion 210 is configured to be connected to the carrier 100. For example, the carrier 100 can be fixed to the fixing base assembly 200 by engaging the engaging member 1203 at the engaging portion 210 of the fixing base assembly 200. In an example, four engaging portions 210 may be symmetrically arranged on the fixing base assembly 200, so that the bracket device 120 (particularly the engaging member 1203 thereof) is connected to the fixing base assembly 200 at four engaging points, thereby enabling the carrier 100 to be more firmly positioned on the fixing base assembly 200.

When the fixing base assembly 200 is placed on the vehicle seat 500, the fixing base connecting device 220 may be arranged at a side of the fixing base assembly 200 close to the backrest of the vehicle seat 500 and configured to be connected to an anchoring device correspondingly arranged on the vehicle seat 500, so as to fix the fixing base assembly 200 to the vehicle seat 500. The supporting leg 230 is arranged at a side of the fixing base assembly 200 away from the backrest of the vehicle seat 500, and the supporting leg 230 is telescopic, so that a lower end of the supporting leg 230 can abut against a floor of the vehicle, thereby supporting the fixing base assembly 200 in the vehicle. In a specific example, the fixing base connecting device 220 may be an ISOFIX insert to be detachably connected to an ISOFIX interface (i.e., the anchoring device) correspondingly arranged on the vehicle seat.

Optionally, the carrier 100 may also include a handle 150. Referring to FIG. 14 and FIG. 15A together, in an example, the handle 150 is pivotably arranged on the box body 110. For example, both ends of the handle 150 are pivotably arranged on both sides of the box body 110 in the transverse direction D2 respectively. For example, both ends of the handle 150 are specifically arranged on the first bracket 121, or directly connected to positions of the box body 110 near the opening. The handle 150 may be a hard handle, that is, made of a hard material. However, the present disclosure is not limited thereto, and the handle 150 may be a soft handle such as a draw cord or a webbing. For example, both ends of the soft handle 150 as shown in FIG. 15B may be arranged at both sides of the box body 110 in the longitudinal direction D1 through magnetic snap assemblies. In addition, although not shown in the drawings, it should be understood that both ends of the soft handle 150 may be arranged on both sides of the box body 110 in the transverse direction D2. In another example, referring to FIG. 14 and FIG. 15C together, the carrier 100 may further include a canopy assembly, the canopy assembly including a canopy 132 covering the box body 110 and a canopy frame 131 supporting the canopy 132. The canopy may be configured to shield the accommodation space of the box body 110. The canopy frame 131 may be connected to an edge of the canopy 132 and arranged near the opening of the box body 110, for example, arranged above the first bracket 121. In this example, a handle 150 similar to that in the previous example may be provided, and optionally or alternatively, the handle 150 may be arranged on the canopy 132. Specifically, as shown in FIG. 15C, the handle 150 can be detachably or non-detachably arranged on a top side of the canopy 132, where the handle 150 can be a hard handle or a soft handle, which is not limited in the present disclosure.

Referring back to FIG. 14, for ease of understanding, an auxiliary reference plane S is shown in FIG. 14, and the auxiliary reference plane S is perpendicular to the longitudinal direction D1 of the carrier 100 and passes through a center of the carrier 100 along the longitudinal direction D1. The auxiliary reference plane S has a first side and a second side opposite to each other in the longitudinal direction D1. When the carrier 100 is fixed to the vehicle seat 500 through the fixing base assembly 200, since the carrier 100 has a large length, the carrier 100 is fixed to the fixing base assembly 200 with an offset in the longitudinal direction D1 (that is, a central axis of the carrier 100 in the longitudinal direction D1 is offset from a central axis of the fixing base assembly 200 in the longitudinal direction D1), so that an end of the carrier 100 away from the fixing base assembly 200 is suspended. That is, the fixing base assembly 200 is connected to an end (hereinafter, which may be referred to as "first end") of the carrier 100 in the longitudinal direction D1. In some embodiments, the fixing base assembly 200 may be completely located on one side of the central axis of the carrier 100 in the longitudinal direction D1. In some embodiments, although the fixing base assembly 200 is offset relative to one side of the central axis of the carrier 100 in the longitudinal direction D1, a part of the fixing base assembly 200 may be located on the other side of the central axis of the carrier 100 in the longitudinal direction D1.

Specifically, the fixing base assembly 200 is connected to the carrier 100 (e.g., the third bracket 123 thereof) and is located at one side (hereinafter, referred to as "first side") of the auxiliary reference plane S, e.g., a side near a vehicle door. Alternatively, most of the region of the fixing base assembly 200 is located at the first side of the auxiliary reference plane S, so that an end portion (hereinafter, may be referred to as "second end") of the carrier 100 located at the other side (hereinafter, referred to as "second side") of the auxiliary reference plane S is suspended. In other examples, the first side and the second side may be interchanged. That is, the first side may not be the side close to the vehicle door; alternatively, the first side and the second side are equidistant from the vehicle door, and the present disclosure is not limited thereto. In some embodiments, an end of the carrier 100 located on the first side of the auxiliary reference plane S may be referred to as the first end, and the other end thereof located on the second side of the auxiliary reference plane S may be referred to as the second end.

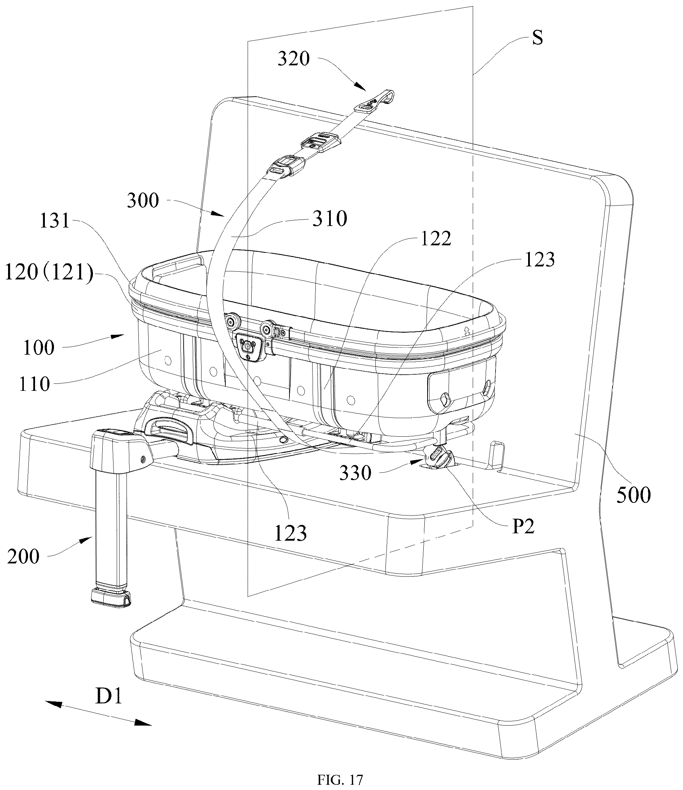

To this end, referring to FIG. 17 to FIG. 18B together, the present disclosure also provides an auxiliary fixing device 300 to cause the carrier 100 to be more stably arranged on the vehicle seat 500.

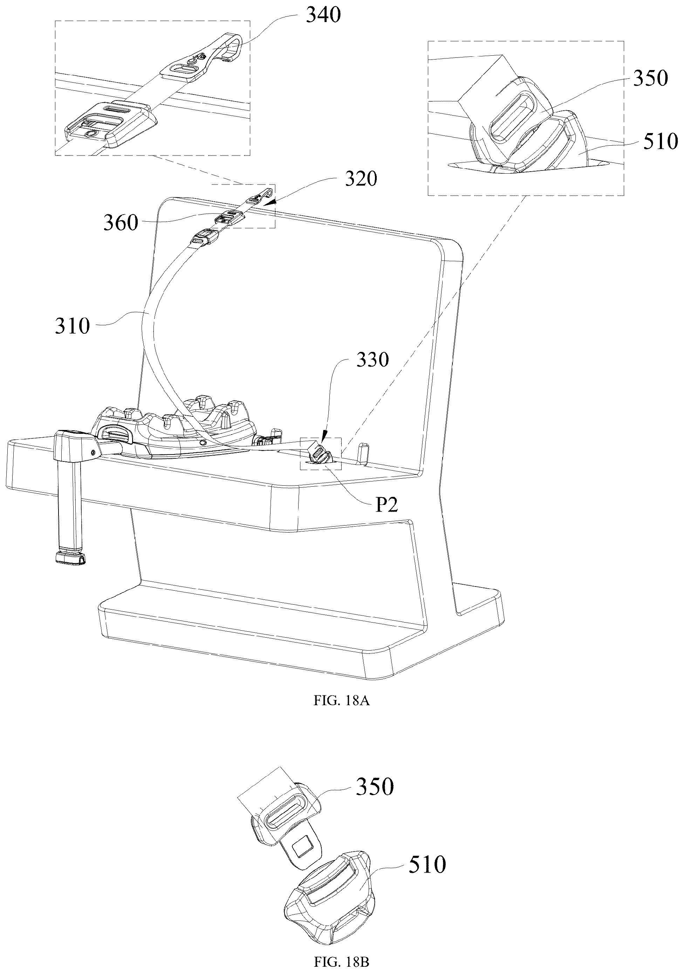

FIG. 17 is another perspective view of the carrier 100 shown in FIG. 14 fixed to the vehicle seat 500 through the fixing base assembly 200 and the auxiliary fixing device 300. FIG. 18A is a perspective view of the fixing base assembly 200 and the auxiliary fixing device 300 shown in FIG. 17 and partial enlarged views of the auxiliary fixing device 300, in which the partial enlarged views respectively show a first fixing member 340 of the auxiliary fixing device 300 and a second fixing member 350 engaged with a second anchoring device 510 arranged on the vehicle seat 500. FIG. 18B is a perspective view of the second fixing member 350 of the auxiliary fixing device 300 shown in FIG. 18A in another state (i.e., a state where the second fixing member is separated from the second anchoring device 510).

Specifically, as shown in FIG. 18A and FIG. 18B, the auxiliary fixing device 300 includes a fixing belt 310, a first connecting end 320, and a second connecting end 330, where the first connecting end 320 and the second connecting end 330 are located at both ends of the fixing belt 310 respectively. In an example, referring to FIG. 17 to FIG. 17B together, the auxiliary fixing device 300 is located at least partially at the other end of the carrier 100 away from the fixing base assembly 200 in the longitudinal direction D1. When the carrier 100 is placed on the vehicle seat 500, the first connecting end 320 and the second connecting end 330 may be connected to two different anchoring points respectively. For example, the two anchoring points may be located above and below the carrier 100 respectively, so that the fixing belt 310 is routed from a position above the carrier 100 to a position below the carrier 100 (e.g., at the bottom of the box body 110 or below the bottom of the box body 110). That is, at least a part of the fixing belt 310 is located on the side of the carrier 100 away from the backrest of the vehicle seat 500, thereby fixing (such as binding) the carrier 100 to the vehicle seat 500. Specifically, referring to FIG. 17 and FIG. 18A together, at least a part of the fixing belt 310 is routed from a side of the third bracket 123 away from the box body 110 to a position below the carrier 100. In an example, the fixing belt 310 may be a fixing webbing or a fixing cord, but the present disclosure is not limited thereto. It should be noted that "above" and "below" described herein may refer to "above" and "below" shown in FIG. 17, and are not limited to "above" and "below" a certain component (e.g., the carrier) within a range in the longitudinal direction D1.

In some embodiments, the auxiliary fixing device 300 may be replaced by a vehicle seat belt, for example, which falls within the protection scope of the present application. A shoulder belt of the vehicle seat belt may serve as the fixing belt 310.

In this embodiment, as shown in FIG. 18A, the first connecting end 320 of the auxiliary fixing device 300 is provided with the first fixing member 340, and is connected to a first anchoring point (not shown in the drawing) on the vehicle through the first fixing member 340. Specifically, the first anchoring point may be located on the vehicle seat 500, for example on an upper side or rear side of the backrest of the vehicle seat 500. In some embodiments, for example, when the first anchoring point is located on the rear side of the backrest, the first anchoring point may be located lower than a top surface of the carrier 100. Optionally or alternatively, the first anchoring point may also be located at an associated anchoring position above the vehicle seat 500 (e.g., an inner wall of a compartment). More specifically, as shown in FIG. 14 and FIG. 17 together, the first anchoring point is located on the first side of the auxiliary reference plane S. For example, the first fixing member 340 may be a Tether hook, and the first anchoring point may be correspondingly provided with a first anchoring device (not shown) such as a tether interface or a connecting rod in fitting connection with the first fixing member 340. It should be understood that the first fixing member 340 and the corresponding anchoring device of the present disclosure are not limited to the above-mentioned structures, and may alternatively form a hook-and-loop engaging structure, a snap-fit engaging structure, or the like, for example.

Optionally or additionally, the second connecting end 330 of the auxiliary fixing device 300 may be connected to a second anchoring point P2. In an example, as shown in FIG. 18A, the second connecting end 330 may be provided with a second fixing member 350 and connected to the second anchoring point P2 through the second fixing member 350. Specifically, the second anchoring point P2 may be located on the vehicle seat 500, for example, located near a junction of the backrest and a seat portion on the vehicle seat 500. For example, in this embodiment, the second fixing member 350 may be a Tether hook or engaging hook, and the second anchoring point P2 may be correspondingly provided with a second anchoring device 510 such as a Tether interface or an engaging rod. In some embodiments, the second anchoring point P2 may be a vehicle seat belt interface or an ISOFIX interface, and the second fixing member 350 is correspondingly a structure fitting the second anchoring point P2, such as a vehicle seat belt latch or an ISOFIX insert. Optionally, in the longitudinal direction D1 of the carrier 100, the second anchoring point P2 is located on a side opposite to the first anchoring point. That is, the second anchoring point P2 is located on the second side of the auxiliary reference plane S.

Specifically, taking the arrangement position of the carrier 100 shown in FIG. 17 as an example, the fixing base assembly 200 may be connected to the carrier 100 and located on the first side of the auxiliary reference plane S. Projections of the first anchoring point and the second anchoring point P2 on a horizontal plane (i.e., a plane parallel to a vehicle chassis) may be located on the first side and the second side of the auxiliary reference plane S respectively. For example, as viewed in the perspective of FIG. 17, the fixing base assembly 200 is arranged below the carrier 100 and offsets towards the first side of the auxiliary reference plane S (offset to the left in the drawing), e.g., the side close to the vehicle door, the first anchoring point is located on the same first side of the auxiliary reference plane S as the fixing base assembly 200 (for example, the upper left of the carrier 100 in the drawing), and the second anchoring point P2 is located on the second side of the auxiliary reference plane S (for example, the lower right of the carrier 100 in the drawing).

Furthermore, in another example, the first anchoring point may alternatively be located on the second side of the auxiliary reference plane S, e.g., the side away from the vehicle door, i.e., it may be located on the same side as the second anchoring point P2. In yet another example, the first anchoring point may also be located on the auxiliary reference plane S.

Optionally, as shown in FIG. 18A, the auxiliary fixing device 300 may further include a length adjuster 360. The length adjuster 360 may be arranged on the fixing belt 310, and configured to adjust a length of the fixing belt 310. By providing the length adjuster 360, when the fixing belt 310 needs to be routed around the carrier 100, the fixing belt 310 can be adjusted to a larger length, so as to facilitate the routing and binding, and after the binding, the fixing belt 310 is tightened by the length adjuster 360, so that the carrier 100 is more firmly bound to the vehicle seat 500.

When the carrier 100 is fixed to the vehicle seat 500 through, for example, the fixing base assembly 200, the first connecting end 320 of the auxiliary fixing device 300 is connected to the first anchoring point, and the fixing belt 310 is routed from the position above the carrier 100 to the position below the carrier 100 through the side of the carrier 100 away from the backrest of the vehicle seat 500, so as to facilitate the second connecting end 330 to be connected to the second anchoring point P2. Specifically, the fixing belt 310 routed to the position below the carrier 100 may pass below the box body 110 (e.g., between the third bracket 123 of the carrier 100 and the box body 110), or pass below the third bracket 123, and then is connect to the second anchoring point P2.

In addition, by respectively providing the first anchoring point and the second anchoring point P2 on the vehicle seat 500 instead of on the carrier 100, the carrier 100 can be fixed to the vehicle seat 500 more stably. It should be noted that the projections of the first anchoring point and the second anchoring point on the horizontal plane may fall within a projection of the carrier 100 on the horizontal plane, or may be outside the projection of the carrier 100 on the horizontal plane.

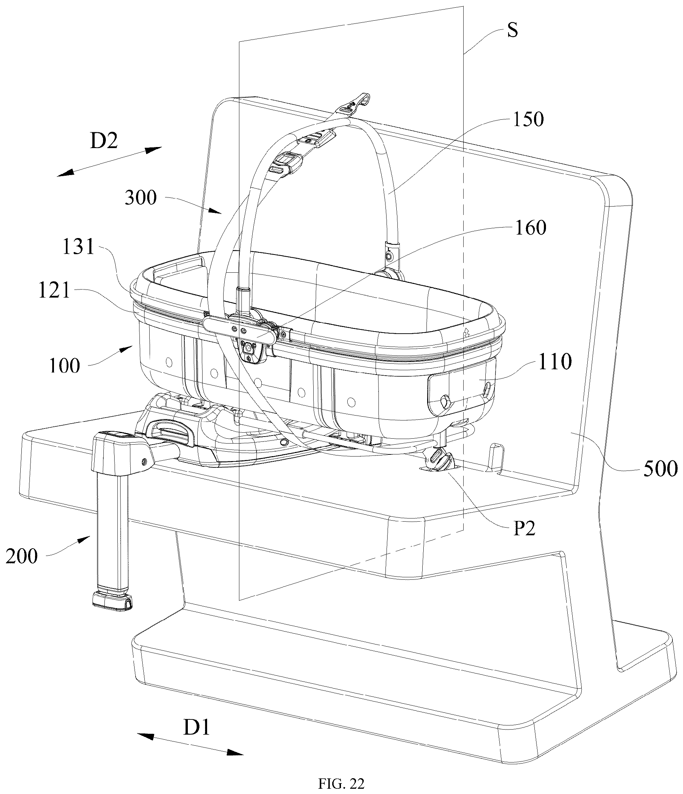

In addition, a belt guide mechanism may be arranged on the carrier 100, for example, on the bracket device 120 (such as the first bracket 121 and/or the third bracket 123) of the carrier 100, so that the fixing belt 310 passes through the belt guide mechanism and is connected to the second anchoring point P2, which is described below in connection with FIG. 22 to FIG. 23. In addition, the fixing belt 310 may also be routed and connected to the bracket device 120 (e.g., the third bracket 123) of the carrier 100, and then extend and be connected to the second anchoring point P2, so as to increase fixing stability.

By using such an auxiliary fixing device 300, the carrier 100 can be fixed in an auxiliary mode, and an end of the carrier 100 that is not in contact and engaged with the fixing base assembly 200 is bound and fixed, so as to improve firmness of fixing of the carrier 100 to the fixing base assembly 200 and the vehicle seat 500, thereby reducing the possibility of deformation of the end that is not in contact and engaged with the fixing base assembly 200 or greatly reducing a deformation amount thereof during a forward impact, and further ensuring safety of a carried object (i.e., the pet) in the carrier 100. Meanwhile, the auxiliary fixing device 300 can be fixed by means of an anchoring device (i.e., the anchoring point) arranged on the vehicle, so that the binding is more reliable and has enough strength, an operation and use of the user are further facilitated, and a satisfaction degree of the user is improved.

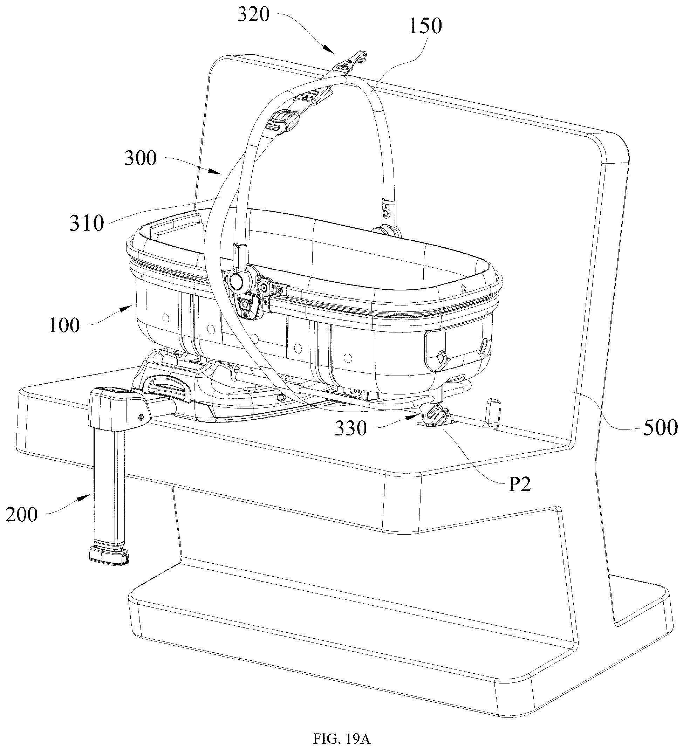

Different routing modes for fixing the carrier 100 by the auxiliary fixing device 300 are specifically described below with reference to FIG. 17 and FIG. 19A to FIG. 19C.

As shown in FIG. 17, in an example, when the carrier 100 (which is not provided with a handle) is needed to be fixed to the vehicle seat 500, the first connecting end 320 of the auxiliary fixing device 300 is connected to the first anchoring point above the vehicle seat 500, and the fixing belt 310 is routed from the position above the carrier 100 to the position below the carrier 100 through the side of the carrier 100 away from the backrest of the vehicle seat 500. The second connecting end 330 of the auxiliary fixing device 300 is connected to the second anchoring point P2 on the vehicle seat 500.

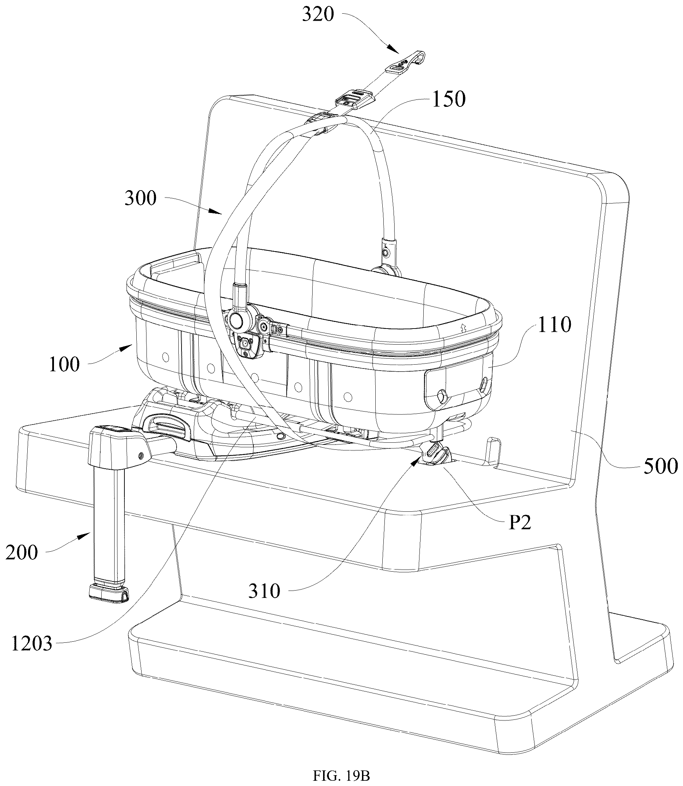

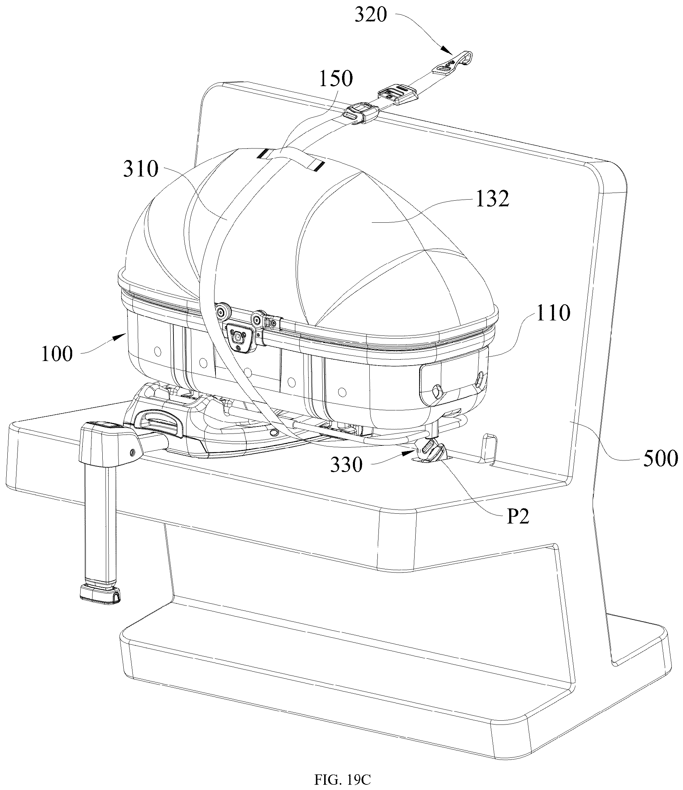

As shown in FIG. 19A to FIG. 19C, the carrier 100 may be provided with a handle 150, which is, for example, a handle 150 arranged on the box body 110 (see FIG. 19A and FIG. 19B), or a handle 150 arranged on the canopy 132 of the carrier 100 (see FIG. 19C).

As shown in FIG. 19A, both ends of the hard handle 150 are connected to both sides of the box body 110 in the transverse direction D2. In an implementation, the first connecting end 320 of the auxiliary fixing device 300 is connected to the first anchoring point, and the fixing belt 310 may be routed around the outside of the handle 150 (that is, the fixing belt 310 does not pass through the handle 150 in a vertical state, and more specifically, the fixing belt 310 is routed over the outside of the handle 150 from the position above the carrier 100 through the side of the carrier 100 away from the backrest of the vehicle seat 500) and is routed to the position below the box body 110, so as to allow the second connecting end 330 to be connected to the second anchoring point P2. The first anchoring point may be located on the first side of the auxiliary reference plane S, and the second anchoring point P2 is located on the second side of the auxiliary reference plane S. Certainly, the application is not limited thereto, and the first anchoring point may also be located on the auxiliary reference plane S or on the second side of the auxiliary reference plane S.

As shown in FIG. 19B, in another implementation, the first connecting end 320 of the auxiliary fixing device 300 is connected to the first anchoring point above the carrier 100, and the fixing belt 310 may also pass between the hard handle 150 and the box body 110 through the position above the carrier 100 (that is, the fixing belt 310 passes through the handle 150 in the vertical state), and then, be routed to the position below the box body 110 through the side of the carrier 100 away from the backrest of the vehicle seat 500. The first anchoring point may be located on the first side of the auxiliary reference plane S, and the second anchoring point P2 is located on the second side of the auxiliary reference plane S. Certainly, the application is not limited thereto, and the first anchoring point may also be located on the auxiliary reference plane S or on the second side of the auxiliary reference plane S.

Moreover, as shown in FIG. 19C, in still another implementation, a handle 150 is arranged on the canopy 132 of the carrier 100 (for example, on the top side of the canopy 132). The first connecting end 320 of the auxiliary fixing device 300 is connected to the first anchoring point above the carrier 100, and the fixing belt 310 may extend downwards from the position above the carrier 100, pass through the handle 150 (more specifically, pass between the handle 150 and the canopy 132), and then be routed to the position below the box body 110 through the side of the carrier 100 away from the backrest of the vehicle seat 500, so as to allow the second connecting end 330 to be connected to the second anchoring point P2. Certainly, the above implementations are merely exemplary and are not intended to limit the routing mode of the fixing belt of the present disclosure. The first anchoring point may be correspondingly located on the auxiliary reference plane S, and the second anchoring point P2 is located on the second side of the auxiliary reference plane S. Certainly, the application is not limited thereto, and the first anchoring point may also be located on the first side of the auxiliary reference plane S or on the second side of the auxiliary reference plane S.

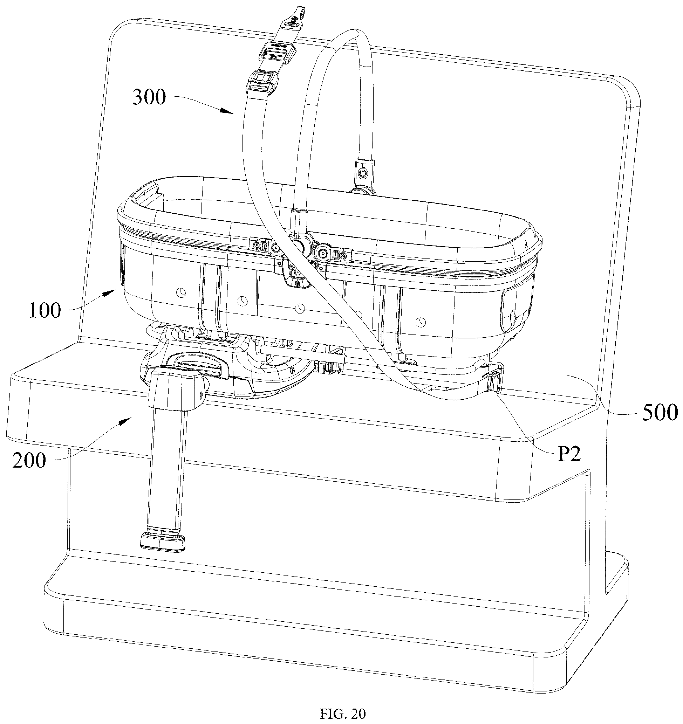

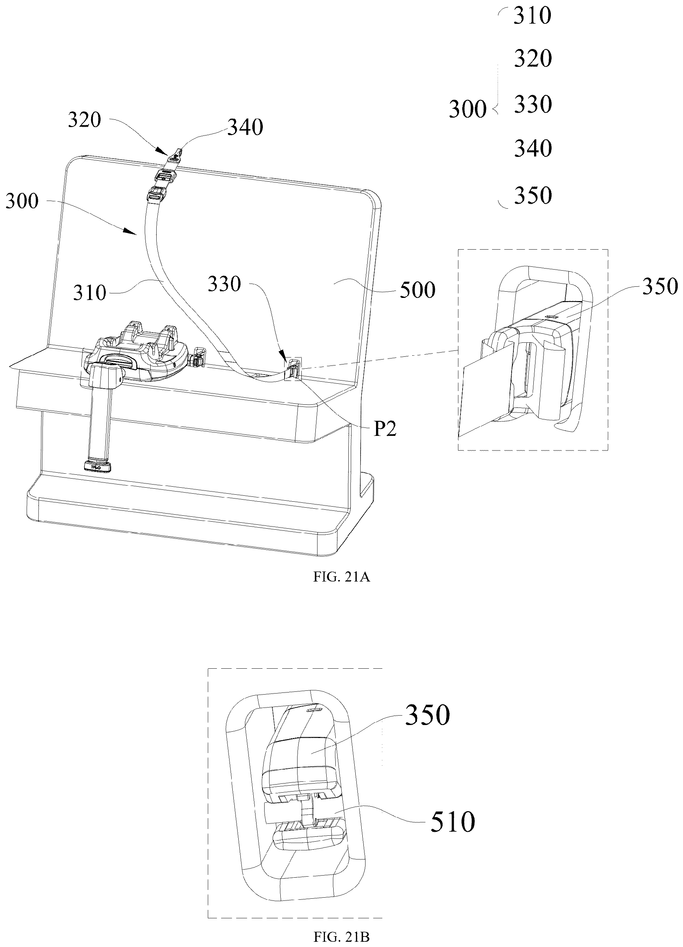

FIG. 20 is a perspective view of a carrier 100 according to a fifth embodiment of the present disclosure fixed to a vehicle seat 500 through a fixing base assembly 200 and an auxiliary fixing device 300. FIG. 21A is a perspective view of the fixing base assembly 200 and the auxiliary fixing device 300 shown in FIG. 20 and a partial enlarged view of the auxiliary fixing device 300. FIG. 21B is a perspective view of a second fixing member 350 of the auxiliary fixing device 300 shown in FIG. 21A from another perspective to show a second anchoring device 510 arranged on the vehicle seat 500. For the sake of understanding, similar structures in some embodiments of the present disclosure are denoted by the same reference numerals such as "carrier 100", "fixing base assembly 200", and "vehicle seat 500".

As shown in FIG. 20 and FIG. 21A, the auxiliary fixing device 300 of this embodiment has a similar structure to that of the auxiliary fixing device 300 of the fourth embodiment described above. That is, the auxiliary fixing device 300 includes a fixing belt 310 as well as a first connecting end 320 and a second connecting end 330 at both ends of the fixing belt 310. The first connecting end 320A is connected to a first anchoring point (not shown) above the vehicle seat 500, and the second connecting end 330 is connected to a second anchoring point P2 below the carrier 100. The fixing belt 310 is routed from the position above the carrier 100 to the position below the box body 110 through the side of the carrier 100 away from the backrest of the vehicle seat 500. In an example, the first connecting end 320 may be provided with a first fixing member 340 and the second connecting end 330 may be provided with the second fixing member 350.

As shown in FIG. 21A and FIG. 21B, this embodiment is different from the fourth embodiment in that the second fixing member 350 of this embodiment may be a LATCH fixing member to be connected to the second anchoring device 510 arranged correspondingly on the vehicle. The second anchoring device is, for example, another ISOFIX interface other than the ISOFIX interface connected to the fixing base assembly 200. In other words, when the auxiliary fixing device 300 is arranged on the vehicle seat on a side of the vehicle near a vehicle window (e.g., the vehicle seat on the right side), the fixing base assembly 200 may be mounted to the ISOFIX interface on this side, and at this moment, the second fixing member 350 may be connected to the ISOFIX interface at the vehicle seat in the middle or on the left side.

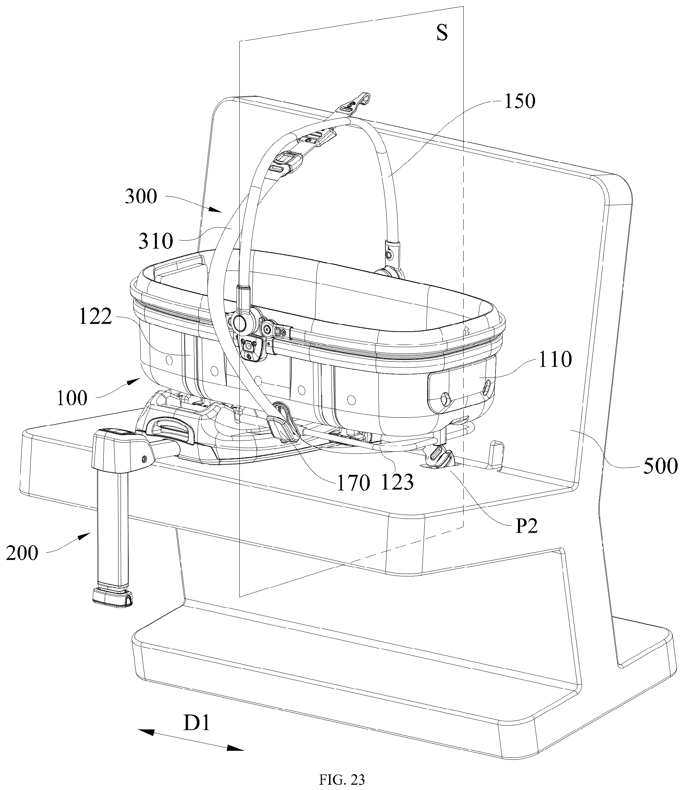

Referring to FIG. 22 and FIG. 23 together, at least one belt guide mechanism may be arranged on the carrier 100 for the fixing belt 310 of the auxiliary fixing device 300 to pass through, so as to increase the number of connecting points between the auxiliary fixing device 300 and the carrier 100, thereby better fixing the carrier 100. In this embodiment, the at least one belt guide mechanism may include a first belt guide mechanism 160 and/or a second belt guide mechanism 170, and details are described below.

FIG. 22 is a perspective view of a carrier 100 according to a sixth embodiment of the present disclosure fixed to a vehicle seat 500 through a fixing base assembly 200 and an auxiliary fixing device 300.

As shown in FIG. 22, the carrier 100 of this embodiment may further be provided with a first belt guide mechanism 160, for the fixing belt 310 to pass through the first belt guide mechanism 160 and be limited between the first belt guide mechanism 160 and the carrier 100, so as to further limit movement of the fixing belt 310, and further enhance firmness after the fixing belt 310 is bound to the carrier 100, so that the fixing belt 310 is not prone to deviate nor to loose or slip from the carrier 100, and stability of the fixed carrier 100 is improved. The first belt guide mechanism 160 may be arranged near the opening of the box body 110, that is, near an upper edge of the box body 110.

Specifically, the first belt guide mechanism 160 may be arranged (e.g., centrally arranged in the longitudinal direction D1) on the first bracket 121 and/or the canopy frames 131. In an example, each of both sides of the carrier 100 may be provided with the first belt guide mechanism 160 respectively. For example, two first belt guide mechanisms 160 are symmetrically arranged on both sides of the carrier 100 along the transverse direction D2. However, it should be understood that the arrangement position and the number of the first belt guide mechanisms 160 of the present disclosure are not limited to the above-described embodiments.

Optionally, the first belt guide mechanism 160 may be a substantially long-strip-shaped plate, and may be fixed to at least one of the first bracket 121, the canopy frames 131, and the box body 110 by a fastener such as a screw. The fixing belt 310 may pass through a channel (also referred to as a first channel) between the first belt guide mechanism 160 and the first bracket 121 (or the canopy frames 131 or the box body 110) to limit the fixing belt 310.

Optionally, the first belt guide mechanism 160 has two first channels symmetrically arranged with respect to the auxiliary reference plane S. That is, the two first channels are located on the first side and the second side of the auxiliary reference plane S respectively. When the fixing base assembly 200 is connected to the carrier 100 at the first side of the auxiliary reference plane S, the auxiliary fixing device 300 may pass through one of the two first channels located at the first side or the second side of the auxiliary reference plane S, so that the carrier 100 is more stably fixed to the vehicle seat 500.

In other examples, the first belt guide mechanism 160 may also be arranged to be offset from a center of the carrier 100 in the longitudinal direction D1 towards the first side or the second side of the auxiliary reference plane S, and optionally, have two first channels arranged in the longitudinal direction. For example, at least one of the two first channels of the first belt guide mechanism 160 may be located at the first side or the second side of the auxiliary reference plane S, or both of the two first channels may be located at the first side or the second side of the auxiliary reference plane S, but the present disclosure is not limited thereto.

In addition, other structures (such as the carrier 100, the fixing base assembly 200, and the auxiliary fixing device 300, etc.) in this embodiment are similar to those in the fourth and fifth embodiments, and are not repeated herein.

For structures and connection relationships of the first belt guide mechanism 160, the first bracket 121, and the canopy frames 131, reference may be made to the structures and connection relationships of the first belt guide mechanism 1400, the first bracket 1231, and the canopy frames A125 in the first to third embodiments, and the structures and connection relationships are not repeated herein. Specifically, the first belt guide mechanism may have the structure including the convex ribs shown in FIG. 5, or the structure including the cam clamp shown in FIG. 8A to FIG. 11B.

By providing such a first belt guide mechanism 160, when the carrier 100 is fixed to the vehicle seat 500, the fixing belt 300 passes through the first belt guide mechanism 160 (or passes between the handle 150 and the box body 110 and passes through the first belt guide mechanism 160) from the position above the carrier 100, and then is routed to the bottom of the box body 110 through the side of the carrier 100 away from the backrest of the vehicle seat 500, so as to be connected at the second anchoring point P2 arranged on the vehicle seat 500.

FIG. 23 is a perspective view of a carrier 100 according to a seventh embodiment of the present disclosure fixed to a vehicle seat 500 through a fixing base assembly 200 and an auxiliary fixing device 300. The carrier 100 according to this embodiment may have a structure similar to the structures of the fourth and fifth embodiments, and details are not repeated herein.

As shown in FIG. 23, the carrier 100 according to this embodiment may be provided with a second belt guide mechanism 170, and the fixing belt 310 may pass through the second belt guide mechanism 170 and be limited, so as to enhance firmness after the fixing belt 310 is bound to the carrier 100, so that the fixing belt 310 is not prone to deviate nor to loose or slip from the carrier 100, and stability of the fixed carrier 100 is improved.

In an example, the second belt guide mechanism 170 may be arranged near the bottom of the box body 110, for example, on the second bracket 122 and/or the third bracket 123 of the bracket device 120. For example, the second belt guide mechanism 170 may be centrally arranged on the third bracket 123 in the longitudinal direction D1, but the present disclosure is not limited thereto. For example, the second belt guide mechanism 170 may be arranged on the third bracket 123 with an offset in the longitudinal direction D1, or the second belt guide mechanism 170 may be arranged on the second bracket 122, for example, or the second belt guide mechanism 170 may be connected directly to the bottom or side of the box body 110, for example.

Optionally, the second belt guide mechanism 170 may be arranged on the second side of the auxiliary reference plane S, i.e., it locates on a side of the auxiliary reference plane S that is different from the side thereof where the fixing base assembly 200 locates, so that the auxiliary fixing device 300 (especially the fixing belt 310 thereof) is more stably connected to the second end of the carrier 100, thereby fixing the second end of the carrier 100 in the suspended state to the vehicle seat 500 to more stably fix the carrier 100 to the vehicle seat 500. For example, the second belt guide mechanism 170 may be a clamp, a ring, a concave-convex fitting structure, etc., which is not limited in the present disclosure.

When the carrier 100 is fixed to the vehicle seat 500, the fixing belt 300 is routed from the position above the carrier 100, passes through the side of the carrier 100 away from the backrest of the vehicle seat 500 (optionally passes between the handle 150 and the box body 110 and arrives to this side), and then passes through the second belt guide mechanism 170, and is routed to the bottom of the box body 110, so as to be fixedly connected to the second anchoring point P2 arranged on the vehicle seat 500.

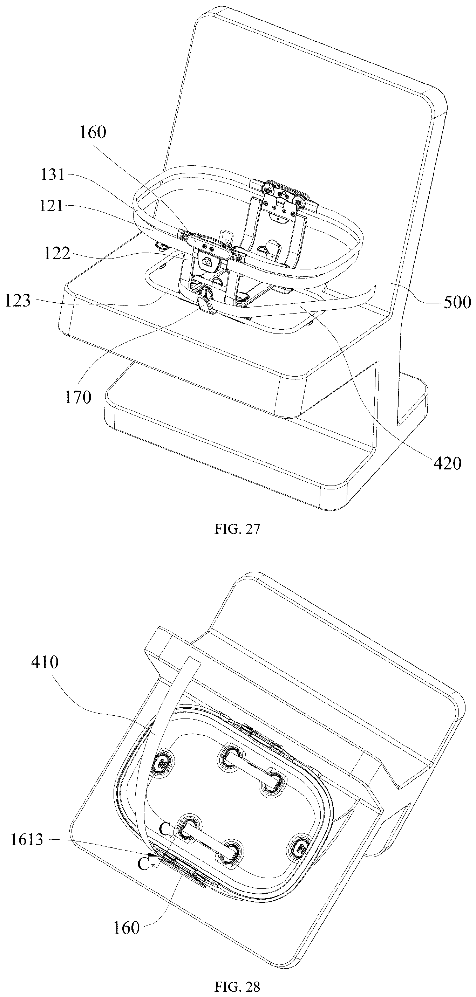

FIG. 22 and FIG. 23 show embodiments in which the first belt guide mechanism 160 or the second belt guide mechanism 170 is arranged, but it should be understood that in other embodiments, the first belt guide mechanism 160 and the second belt guide mechanism 170 may both be arranged on the carrier 100 at the same time, and the numbers and specific positions of the first belt guide mechanism 160 and the second belt guide mechanism 170 are not limited to the above-described embodiment. For example, one first belt guide mechanism 160 may be arranged only on the side of the carrier 100 away from the backrest of the vehicle seat 500, or a plurality of second belt guide mechanisms 170 may be provided. The specific structure of the second belt guide mechanism 170 is described below with reference to FIG. 28 to FIG. 30C.

By providing at least one belt guide mechanism such as the first belt guide mechanism 160 (the first belt guide mechanism may have the structure including the convex ribs shown in FIG. 5 or the structure including the cam clamp shown in FIG. 8A to FIG. 11B) and/or the second belt guide structure 170 on the carrier 100, the fixing belt 310 of the auxiliary fixing device 300 passes through the belt guide mechanism arranged at the second side of the auxiliary reference plane S, or passes through a part of the belt guide mechanism located at the second side of the auxiliary reference plane S, such that when the fixing base assembly 200 is connected to the carrier 100 at the first side of the auxiliary reference plane S (i.e., connected to the first end of the carrier 100), the second end of the carrier 100 in the suspended state can be further fixed to the vehicle seat 500 through the auxiliary fixing device 300, thereby more stably fixing the carrier 100 to the vehicle seat 500.

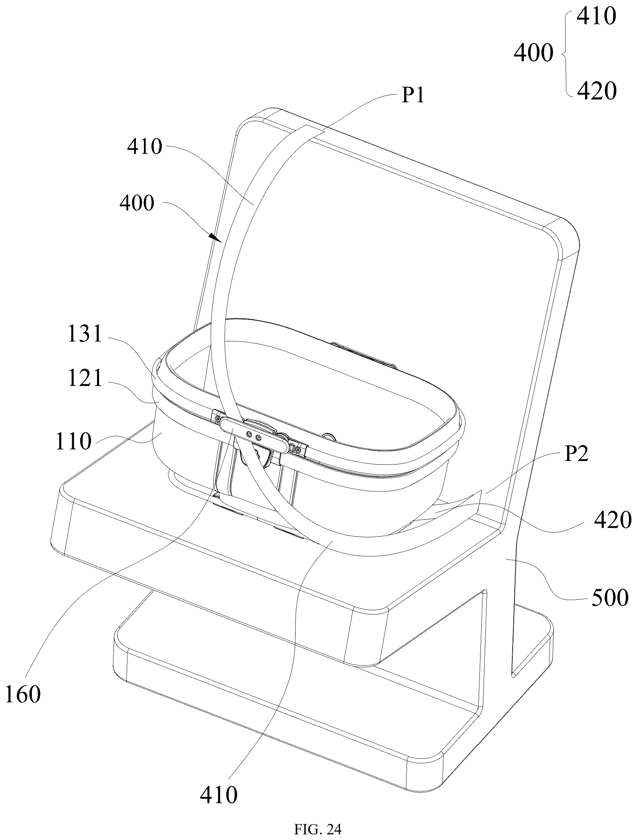

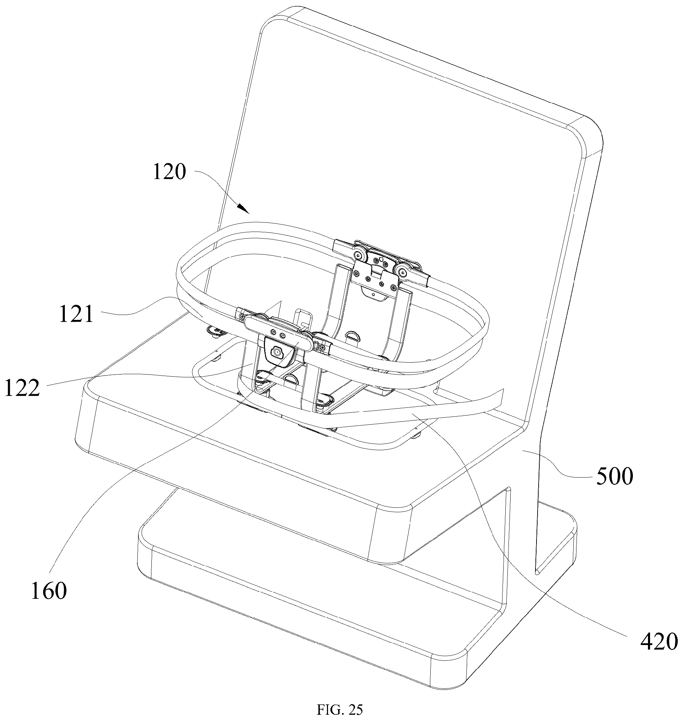

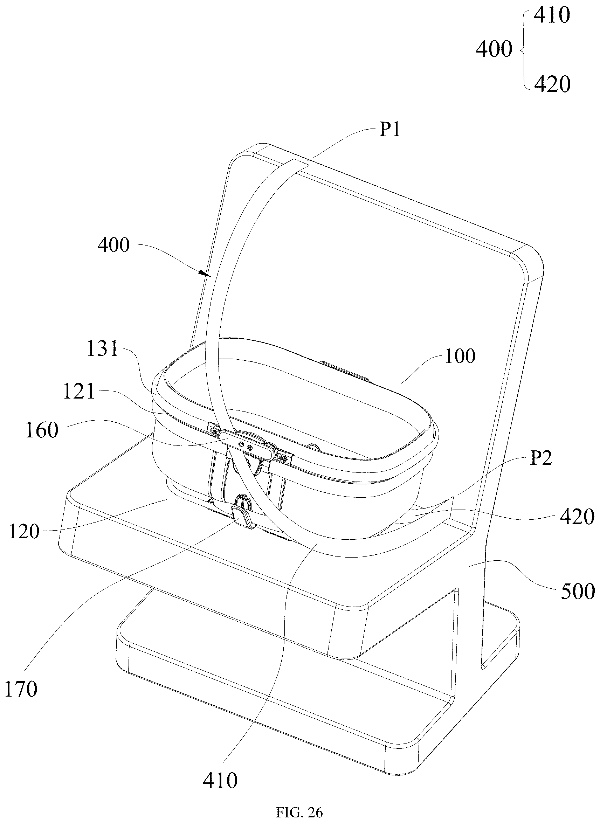

Specifically, referring to FIG. 24 to FIG. 27, an auxiliary fixing device 400 is further provided in an eighth embodiment and a ninth embodiment of the present disclosure. FIG. 24 is a perspective view of a carrier 100 and the auxiliary fixing device 400 according to the eighth embodiment of the present disclosure, and FIG. 25 is a perspective view of the carrier 100 shown in FIG. 24 after the box body 110 is omitted. FIG. 26 is a perspective view of a carrier 100 and the auxiliary fixing device 400 according to the ninth embodiment of the present disclosure, and FIG. 27 is a perspective view of the carrier 100 shown in FIG. 26 after the box body 110 is omitted.

As shown in FIG. 24 and FIG. 25, the carrier 100 according to the eighth embodiment of the present disclosure is provided with a first belt guide mechanism 160 similar to that in the sixth embodiment described above (the first belt guide mechanism may have the structure including the convex ribs shown in FIG. 5, or the structure including the cam clamp shown in FIG. 8A to FIG. 11B). In this embodiment, the auxiliary fixing device 400 may include a shoulder belt 410, and the shoulder belt 410 constitutes a fixing belt of the auxiliary fixing device 400. Specifically, both ends of the shoulder belt 410 may be connected to a first anchoring point P1 and a second anchoring point P2 arranged on the vehicle seat respectively.

In a specific example, the auxiliary fixing device 400 may be a three-point fixing belt including a shoulder belt 410 and a waist belt 420 connected to each other. An upper end of the shoulder belt 410 (i.e., an end corresponding to the first anchoring point) is connected to the top of the backrest of the vehicle seat 500, the middle of the shoulder belt 410 obliquely crosses the first bracket 121 of the bracket device 120 and a part of the box body 110, and passes through the first belt guide mechanism 160 arranged on the canopy frames 131 or the first bracket 121, and a lower end of the shoulder belt 410 is detachably connected to the seat belt buckle (i.e., the second anchoring device) of the vehicle seat 500 at the second anchoring point P2 through the seat belt latch (i.e., the second fixing member, not shown in the drawing). The waist belt 420 has its one end connected to the vehicle seat 500 (at a third anchoring point, which may also be located on the first side of the auxiliary reference plane S, see the auxiliary reference plane S shown in FIG. 1), and has its the other end connected to the lower end of the shoulder belt 410 via the seat belt latch. The waist belt 420 is routed around the outside of the two second brackets 122, thereby restraining the bottom of the carrier 100 to the vehicle seat 500. More specifically, the third anchoring point may be on the first side of the auxiliary reference plane S, and a projection of the third anchoring point on the horizontal plane may fall within the projection of the carrier 100 on the horizontal plane, or outside the projection of the carrier 100 on the horizontal plane.

As shown in FIG. 26 and FIG. 27, in the ninth embodiment of the present disclosure, in addition to the first belt guide mechanism 160, the carrier 100 according to this embodiment may further be provided with a second belt guide mechanism 170 similar to that in the aforementioned seventh embodiment, and the auxiliary fixing device 400 of this embodiment is similar to that in the aforementioned eighth embodiment, that is, it includes a shoulder belt 410 and optionally an waist belt 420, where the shoulder belt 410 constitutes the fixing belt of the auxiliary fixing device 400, and both ends of the shoulder belt 410 may be connected to a first anchoring point P1 and a second anchoring point P2 arranged on the vehicle seat respectively.

In some embodiments, the auxiliary fixing device 300 may be replaced by a vehicle seat belt, for example, which falls within the protection scope of the present application. A shoulder belt of the vehicle seat belt may serve as the shoulder belt 410, and a waist belt of the vehicle seat belt may serve as the waist belt 420.

More specifically, in this embodiment, the auxiliary fixing device 400 passes through the first belt guide mechanism 160 (the first belt guide mechanism may have the structure including the convex ribs shown in FIG. 5, or the structure including the cam clamp shown in FIG. 8A to FIG. 11B) and the second belt guide mechanism 170, such that there are multiple connecting points between the auxiliary fixing device 400 and the bracket device 120 of the carrier 100, so that the carrier 100 is better fixed on the vehicle seat 500 and not prone to slip back and forth and or left and right. After the carrier 100 is placed on the vehicle seat 500 or arranged on the vehicle seat 500 through the fixing base assembly (not shown), the shoulder belt 410 passes through the first belt guide mechanism 160 and then is routed around the front side of the box body 110, and then, the second fixing member (e.g., ISOFIX insert, not shown) at the lower end of the shoulder belt 410 is inserted into the second anchoring device (e.g., ISOFIX socket, not shown) of the vehicle seat 500, and meanwhile, the waist belt 420 is routed around the outside of the two second brackets 122 and passes through the second belt guide mechanism 170, so as to further fix the carrier 100. It should be noted that although the drawings show that the shoulder belt 410 passes through the first belt guide mechanism 160 and the waist belt 420 passes through the second belt guide mechanism 170, it should be understood that in other embodiments, the waist belt 420 may not be provided, and the shoulder belt 410 may pass through both the first belt guide mechanism 160 and the second belt guide mechanism 170 at the same time; alternatively, the first belt guide mechanism 160 may not be provided, and the shoulder belt 410 and optionally the waist belt 420 may both pass through the second belt guide mechanism 170, and the present disclosure is not limited thereto.

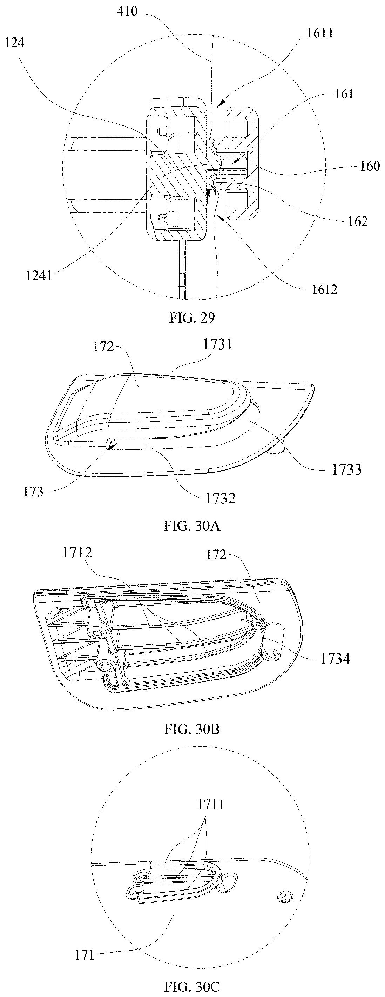

Referring to FIG. 28 to FIG. 30C, FIG. 28 is a perspective view of the carrier shown in FIG. 26 fixed to the vehicle seat from another perspective, and FIG. 29 is a sectional view taken along line C-C in FIG. 28 to show a structural view of the first belt guide mechanism 160 in an embodiment of the present disclosure. FIG. 30A to FIG. 30C show structural views of the second belt guide mechanism 170 in an embodiment of the present disclosure.

Referring to FIG. 26, FIG. 28, and FIG. 29 together, in an example, the first belt guide mechanism 160 is a substantially long-strip-shaped plate, the middle thereof may be fixed to the canopy frames 131 or the first bracket 121 by a fastener such as a screw, or be arranged on a guide member 124 on the canopy frames 131 or the first bracket 121, the guide member 124 may be configured to be arranged on the middle of the first bracket 121, and an end of each of the canopy frames 131 is pivotally connected to the guide member 124. The first belt guide mechanism 160 and the guide member 124 (or the first bracket 121, or the canopy frames 131) together define two channels 161 (also may be referred to as first channels) for the shoulder belt 410 (i.e., the fixing belt) to pass through. The two channels 161 are respectively located on both sides of the screw and arranged opposite to each other. Depending on the different position of the carrier on the vehicle seat 1600, the shoulder belt 410 from the left side or the right side may be allowed to pass through the channel.

In some embodiments, each channel 161 also has a side introduction port 1613 (see FIG. 28), and the side introduction port 1613 is in communication with the channel 161. By providing the side introduction port 1613, the shoulder belt 410 can easily slide into the channel 161 in the lateral direction. It may be understood that in other embodiments, the first belt guide mechanism 160 may also be arranged directly on the box body 110 or on the first bracket 121 or on the canopy frames 131. It may be understood that the number of the channels 161 may be one or two or more.

As shown in FIG. 29, the guide member 124 is provided with at least one first convex rib 1241 protruding towards the first belt guide mechanism 160. The first belt guide mechanism 160 is provided with at least one second convex rib 162 protruding towards the guide member 124, and the first convex rib(s) 1241 and the second convex rib(s) 162 are alternately arranged in the extending direction of the shoulder belt 410. That is, the first convex rib(s) 1241 and the second convex rib(s) 162 are arranged on side walls opposite to each other in the channel 161. By reasonably setting heights of the first convex rib(s) 1241 and the second convex rib(s) 162, the shoulder belt 410 located between the first port 1611 and the second port 1612 of the channel 161 is bent around a top end of the first convex rib(s) 1241 and a top end of the second convex rib(s) 162 in the channel 161, and thus, the shoulder belt 410 receives movement resistance from the first convex rib(s) 1241 and the second convex rib(s) 162. Thus, after the auxiliary fixing device 400 is tightened, the shoulder belt 410 would not easily slip relative to the carrier 100.

Moreover, referring to FIG. 30A to FIG. 30C, the second belt guide mechanism 170 includes a bottom shell 171 and a face shell 172. The bottom shell 171 may be fixed to a fixing sheet on the bracket device 120 or the box body 110 through, for example, a screw, or the like. Alternatively, the bottom shell 171 is integrally formed with the bracket device 120 or the box body 110. The face shell 172 may be mounted on the bottom shell 171 through fasteners such as screws. The bottom shell 171 and the face shell 172 together define a channel (also referred to as a second channel) 173 for the fixing belt (e.g., the waist belt 420 and/or the shoulder belt 410) of the auxiliary fixing device 400 to pass through. The channel 173 has a first port 1731 and a second port 1732. When the carrier 100 is fixed to the vehicle seat 500 through the auxiliary fixing device 400, the fixing belt (e.g., the waist belt 420 and/or the shoulder belt 410) may pass through the first port 1731 and the second port 1732. Referring to FIG. 30A, in this embodiment, the first port 1731 and the second port 1732 are both provided on the face shell 172. In some other embodiments, the first port 1731 and the second port 1732 may be collectively defined by the bottom shell 171 and the face shell 172, for example.

Referring to FIG. 30A and FIG. 30B, in some embodiments, the channel 173 also has a side introduction port 1733. The side introduction port 1733 is in communication with both the first port 1731 and the second port 1732 at the same time, and the side introduction port 1733 has a guide inclined surface 1734. By providing the side introduction port 1733 and the guide inclined surface 1734, the fixing belt can be easily slid into the channel 173 in the lateral direction.

Referring to FIG. 30B and FIG. 30C, the bottom shell 171 is provided with at least one third convex rib 1711 protruding towards the face shell 172. The face shell 172 is provided with at least one fourth convex rib 1712 protruding towards the bottom shell 171. The third convex rib(s) 1711 and the fourth convex rib(s) 1712 are alternately arranged in the extending direction of the fixing belt. That is, the third convex rib(s) 1711 and the fourth convex rib(s) 1712 are arranged on side walls opposite to each other in the channel 173. By reasonably setting heights of the third convex rib(s) 1711 and the fourth convex rib(s) 1712, the fixing belt located between the first port 1731 and the second port 1732 is bent around a top end of the third convex rib(s) 1711 and a top end of the fourth convex rib(s) 1712 in the channel 173, and thus, the fixing belt receives movement resistance from the third convex rib(s) 1711 and the fourth convex rib(s) 1712. Thus, after the auxiliary fixing device 400 is tightened, the fixing belt would not easily slip relative to the carrier 100. It may be understood that the bottom shell 171 may be omitted if the third convex rib 1711 is directly arranged on the fixing sheet (e.g., the fixing sheet is arranged on the third bracket 123) of the bracket device 120.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the specification.

The above-described embodiments are only several implementations of the present invention, and the descriptions are relatively specific and detailed, but they should not be construed as limiting the scope of the present invention. It should be understood by those of ordinary skill in the art that various modifications and improvements can be made without departing from the concept of the present invention, and these modifications and improvements shall all fall within the protection scope of the present invention. Therefore, the protection scope of the present invention should be subject to the appended claims.

## Claims

1. A carrier, wherein
the carrier is fixed to a vehicle seat through a fixing base assembly and an auxiliary fixing device,
the fixing base assembly is connected to one end of the carrier in a longitudinal direction, and a central axis of the fixing base assembly in the longitudinal direction is offset relative to a central axis of the carrier in the longitudinal direction; and
the auxiliary fixing device comprises a fixing belt, and the fixing belt is at least partially routed on the other end of the carrier in the longitudinal direction through a side of the carrier away from a backrest of the vehicle seat.

2. The carrier according to claim 1, wherein the auxiliary fixing device comprises:
a first connecting end located at one end of the fixing belt, the first connecting end being connected to a first anchoring point on the vehicle seat through a first fixing member; and
a second connecting end located at the other end of the fixing belt, the second connecting end being connected to a second anchoring point on the vehicle seat through a second fixing member.

3. The carrier according to claim 2, wherein
an auxiliary reference plane is defined, the auxiliary reference plane is perpendicular to the longitudinal direction of the carrier and passes through a center of the carrier in the longitudinal direction, and the auxiliary reference plane has a first side and a second side opposite to each other in the longitudinal direction;
wherein the fixing base assembly is located on the first side of the auxiliary reference plane or is offset towards the first side of the auxiliary reference plane, and the second anchoring point is located on the second side of the auxiliary reference plane.

4. The carrier according to claim 3, wherein
the first anchoring point is located on the first side or the second side of the auxiliary reference plane, or located on the auxiliary reference plane; and/or
the auxiliary fixing device comprises a shoulder belt, and the shoulder belt constitutes the fixing belt.

5. The carrier according to claim 4, wherein the auxiliary fixing device further comprises a waist belt, one end of the waist belt is connected to a third anchoring point on the vehicle seat, and the other end of the waist belt is connected to the second connecting end of the fixing belt at the second anchoring point, wherein the third anchoring point is located on the first side of the auxiliary reference plane.

6. The carrier according to claim 2, wherein the carrier satisfies at least one of:
the first anchoring point is located at the vehicle seat, or located at an associated anchoring location above the vehicle seat, and the second anchoring point is located on the vehicle seat;
the first fixing member is a Tether hook, and the second fixing member is a Tether hook or a LATCH fixing member; and
the carrier comprises a handle, and the fixing belt extends downwards from a position above the carrier, passes through the handle, and is routed to a position below the carrier, so as to be connected to the second anchoring point.

7. The carrier according to claim 1, wherein
an auxiliary reference plane is defined, the auxiliary reference plane is perpendicular to the longitudinal direction of the carrier and passes through a center of the carrier in the longitudinal direction, and the auxiliary reference plane has a first side and a second side opposite to each other in the longitudinal direction;
wherein the fixing base assembly is located on the first side of the auxiliary reference plane or is offset towards the first side of the auxiliary reference plane, and a part of the fixing belt routed to a position below the carrier is located on the second side of the auxiliary reference plane and spaced apart from the fixing base assembly.

8. The carrier according to claim 1, wherein the carrier further comprises at least one of:
a bracket device supporting a box body of the carrier; the bracket device comprising a first bracket, a second bracket, and a third bracket; the first bracket being arranged around a peripheral wall of the box body and close to an upper edge of the box body; the third support being arranged below the box body and spaced apart from the bottom of the box body; and the second bracket being connected between the first bracket and the third bracket, and the second bracket being combined to the box body and extending from one side of the peripheral wall of the box body to the other side of the peripheral wall of the box body via the bottom of the box body; and
a canopy assembly comprising a canopy covering the box body and a canopy frame supporting the canopy, the canopy frame being arranged close to the upper edge of the box body.

9. The carrier according to claim 8, wherein the carrier is further provided with at least one of:
a first belt guide mechanism arranged on the first bracket and/or the canopy frame, the fixing belt being routed from a position above the carrier, passing through the first belt guide mechanism, and being routed to a position below the box body, so as to be connected to the second anchoring point; and
a second belt guide mechanism arranged on the second bracket and/or the third bracket, the fixing belt being routed to a side of the carrier away from a backrest of the vehicle seat and passing through the second belt guide mechanism, so as to be connected to the second anchoring point through a position below the box body.

10. The carrier according to claim 9, wherein an auxiliary reference plane is defined, the auxiliary reference plane is perpendicular to the longitudinal direction of the carrier and passes through a center of the carrier in the longitudinal direction, and the auxiliary reference plane has a first side and a second side opposite to each other in the longitudinal direction;
the first belt guide mechanism has two first channels arranged in the longitudinal direction, and at least one of the two first channels is located on the second side of the auxiliary reference plane; wherein when the carrier is fixed to the vehicle seat through the fixing base assembly and the auxiliary fixing device, the fixing base assembly is connected to the carrier at the first side of the auxiliary reference plane, the second anchoring point is located on the second side of the auxiliary reference plane, and the auxiliary fixing device passes through one of the first channels located on the second side; and/or
the second belt guide mechanism is arranged on the second side of the auxiliary reference plane.

11. A carrier, comprising:
a box body defining an accommodation space;
a bracket device combined to the box body and comprising a guide member; and
a belt guide mechanism arranged on the bracket device and configured to cooperate with a fixing belt assembly to fix the carrier to a vehicle seat;
wherein the belt guide mechanism comprises a first belt guide mechanism, the first belt guide mechanism is arranged on the guide member, and the first belt guide mechanism and the guide member collectively define at least one first channel for the fixing belt assembly to pass through; and
wherein the first belt guide mechanism comprises a cam clamp, and the cam clamp is pivotable relative to the guide member to clamp or release the fixing belt assembly.

12. The carrier according to claim 11, wherein the guide member is provided with at least one first fitting member, the cam clamp is provided with at least one second fitting member, and the first fitting member and the second fitting member are capable of being engaged with each other to act on the fixing belt assembly.

13. The carrier according to claim 12, wherein a plurality of first fitting members protrude from the guide member, a plurality of second fitting members protrude from the cam clamp, and the plurality of first fitting members and the plurality of second fitting members are alternately arranged in a longitudinal direction of the carrier and/or an extending direction of the fixing belt assembly.

14. The carrier according to claim 11, wherein
the first belt guide mechanism comprises a cover, and at least one first channel is formed between the cover and the guide member;
at least one cam clamp is located in the at least one first channel; one end of the cam clamp is pivotally connected to one of the cover and the guide member through a pivot shaft, and the other end of the cam clamp is configured to abut against the other of the cover and the guide member to clamp the fixing belt assembly.

15. The carrier according to claim 11, wherein the first belt guide mechanism further comprises at least one of:
a clamp reset member, the clamp reset member being configured to provide a force biasing the cam clamp towards the guide member;
an operating member configured to drive the cam clamp to pivot, so as to release the clamping of the fixing belt assembly; and
a cover, the cover forming an outer surface of the first belt guide mechanism and being fixedly connected to the guide member; one end of the cam clamp being pivotally connected to the cover, such that the other end of the cam clamp is pivotable towards or away from the guide member.

16. The carrier according to any one of claims 11 to 15, wherein the bracket device comprises: a canopy frame pivotally connected to the guide member and configured to support a canopy; and a first bracket combined to the box body and arranged around a peripheral wall of the box body; and the guide member is arranged on the first bracket.

17. The carrier according to claim 16,
wherein the bracket device further comprises: a second bracket combined to a bottom wall and a side wall of the box body, two ends of the second bracket are connected to the first bracket; and a third bracket arranged below the bottom of the box body and spaced apart from the box body by a certain distance; and/or
the fixing belt assembly comprises a shoulder belt, and the shoulder belt passes through the first channel of the first belt guide mechanism.

18. The carrier according to claim 17, wherein the fixing belt assembly further comprises a waist belt, and the waist belt is routed around the second bracket and passes between the box body and the third bracket.

19. The carrier according to claim 16, wherein the bracket device further comprises:
a third bracket arranged below the bottom of the box body and spaced apart from the box body by a certain distance; and
wherein the belt guide mechanism further comprises a second belt guide mechanism, and the second belt guide mechanism is arranged on the third bracket and has a second channel for the fixing belt assembly to pass through.

20. The carrier according to claim 19, wherein
the fixing belt assembly comprises a shoulder belt, and the shoulder belt passes through the first belt guide mechanism; and/or
the fixing belt assembly comprises a waist belt, and the waist belt passes through the second belt guide mechanism.
